# EUROPEAN PATENT APPLICATION

(11) **EP 4 546 294 A1**
(43) Date of publication of application: **30.04.2025**
(21) Application number: 24765007.0
(22) Date of filing: 14.08.2024
(51) Int. Cl.: G06V 40/12, G06V 40/13, G06F 21/32, G06T 7/11, G06F 3/0488, G06V 10/12

(54) **ELECTRONIC DEVICE COMPRISING FINGERPRINT SENSOR AND OPERATION METHOD THEREOF**

(30) Priority: 11.09.2023 KR 20230120318; 27.09.2023 KR 20230130855
(71) Applicant: Samsung Electronics Co., Ltd, Suwon-si, Gyeonggi-do 16677 (KR)
(72) Inventor: KIM, Minho, Suwon-si Gyeonggi-do 16677 (KR); JEON, Sohyeon, Suwon-si Gyeonggi-do 16677 (KR); CHANG, Moonsoo, Suwon-si Gyeonggi-do 16677 (KR)
(74) Representative: Arnold & Siedsma
(86) International application number: PCT/KR2024/012136
(87) International publication number: WO 2025/058261

(57) **Abstract**

An electronic device according to an embodiment may include a camera, a fingerprint sensor, a display and at least one processor coupled with the camera, the fingerprint sensor and the display. The at least one processor may obtain a first fingerprint image of a user through the camera, obtain a reference fingerprint image based on the first fingerprint image, generate fingerprint information of a plurality of areas of the reference fingerprint image, based on the reference fingerprint image, display on the display a first visual object for guiding fingerprint input of the user based on the reference fingerprint image and the fingerprint information, obtain a second fingerprint image of the user through the fingerprint sensor, identify a first area corresponding to a position of the second fingerprint image among the plurality of the areas, based on at least one crop image corresponding to the second fingerprint image among crop images obtained based on the reference fingerprint image, determine whether the second fingerprint image is enrolled based on whether the fingerprint information of the first area includes the image corresponding to the second fingerprint image, based on a result of the determination, update the enrolled fingerprint image such that the enrolled fingerprint image includes the second fingerprint image, and control the display to display a second visual object updating at least a partial area of the first visual object based on the first area. Besides, various embodiments identified throughout the specification are possible.

## Description

### [Technical Field]

Embodiments disclosed herein relate to an electronic device including a fingerprint sensor and an operating method thereof.

### [Background Art]

With an electronic device increases in use, various functions may be provided on the electronic device. As functions available on the electronic device are diversified, security of information stored in the electronic device becomes important, and this security demand leads to development of authentication techniques based on user's biometric information. The authentication techniques based on the biometric information may include, for example, obtaining the biometric information such as a fingerprint, an iris, voice, a face, or a blood vessel from the user, and determining whether the user is an authorized user by comparing with user biometric information registered in advance.

A fingerprint recognition technique of the biometric information described above is most commercially used in recent for several reasons such as convenience, security, and economic efficiency. The fingerprint recognition technique may reinforce the security of a user device, and facilitate various application services such as mobile payment.

The foregoing information may be provided as related art for the purpose of aiding understanding of the disclosure. No claim or determination is made as to whether any of the foregoing may be applied as prior art in connection with this disclosure.

### [Disclosure of Invention]

### [Solution to Problem]

An electronic device according to an embodiment may include a camera. The electronic device includes a fingerprint sensor. The electronic device includes a display. The electronic device includes at least one processor. The electronic device includes memory storing instructions. wherein the instructions, when being executed by the at least one processor individually or collectively, cause the electronic device to obtain a first fingerprint image of a user through the camera. wherein the instructions, when being executed by the at least one processor individually or collectively, cause the electronic device to obtain a reference fingerprint image based on the first fingerprint image. wherein the instructions, when being executed by the at least one processor individually or collectively, cause the electronic device to generate fingerprint information of a plurality of areas of the reference fingerprint image, based on the reference fingerprint image. wherein the instructions, when being executed by the at least one processor individually or collectively, cause the electronic device to display on the display a first visual object for guiding fingerprint input of the user based on the reference fingerprint image and the fingerprint information. wherein the instructions, when being executed by the at least one processor individually or collectively, cause the electronic device to obtain a second fingerprint image of the user through the fingerprint sensor. wherein the instructions, when being executed by the at least one processor individually or collectively, cause the electronic device to identify a first area corresponding to a position of the second fingerprint image among the plurality of areas, based on at least one crop image corresponding to the second fingerprint image among crop images obtained based on the reference fingerprint image. wherein the instructions, when being executed by the at least one processor individually or collectively, cause the electronic device to determine whether the second fingerprint image is enrolled based on whether the fingerprint information of the first area includes the image corresponding to the second fingerprint image, based on a result of the determination. wherein the instructions, when being executed by the at least one processor individually or collectively, cause the electronic device to update the enrolled fingerprint image such that the enrolled fingerprint image includes the second fingerprint image. wherein the instructions, when being executed by the at least one processor individually or collectively, cause the electronic device to control the display to display a second visual object updating at least a partial area of the first visual object based on the first area.

An operating method of an electronic device according to an embodiment may include obtaining a first fingerprint image of a user through a camera. The operating method may include obtaining a reference fingerprint image based on the first fingerprint image. The operating method may include generating fingerprint information of a plurality of areas of the reference fingerprint image, based on the reference fingerprint image. The operating method may include displaying on a display a first visual object for guiding fingerprint input of the user, based on the reference fingerprint image and the fingerprint information. The operating method may include obtaining a second fingerprint image of the user through a fingerprint sensor. The operating method may include identifying a first area corresponding to a position of the second fingerprint image among the plurality of areas, based on at least one crop image corresponding to the second fingerprint image among crop images obtained based on the reference fingerprint image. The operating method may include determining whether the second fingerprint image is enrolled based on whether the fingerprint information of the first area includes an image corresponding to the second fingerprint image, based on the determination. The operating method may include updating the enrolled fingerprint image such that the enrolled fingerprint image includes the second fingerprint image. The operating method may include controlling the display to display a second visual object updating at least a partial area of the first visual object based on the first area.

### [Brief Description of Drawings]

FIG. 1 is a block diagram of an electronic device in a networked environment according to various embodiments.
FIG. 2 is a block diagram illustrating a configuration of an electronic device according to an embodiment.
FIG. 3 is a diagram for illustrating generating fingerprint information based on a fingerprint image acquired through a camera module according to an embodiment.
FIG. 4 is a diagram for illustrating a user interface (UI) for acquiring a fingerprint image through a camera module according to an embodiment.
FIG. 5 is a diagram for illustrating modifying a distorted portion of a fingerprint image using an artificial intelligence model according to an embodiment.
FIG. 6 is a diagram for illustrating removing a deformed portion of a fingerprint image using an artificial intelligence model according to an embodiment.
FIG. 7 is a diagram for illustrating a visual object for guiding a user's fingerprint input according to an embodiment.
FIG. 8 is a diagram for illustrating a UI representing a visual object for guiding user's fingerprint input according to an embodiment.
FIG. 9 is a diagram for illustrating identifying a area corresponding to a fingerprint image acquired through a fingerprint sensor according to an embodiment.
FIG. 10 is a diagram for illustrating a UI representing a visual object which shows a area of fingerprint enrollment completed according to an embodiment.
FIG. 11 is a diagram for illustrating a UI for guiding a user's fingerprint input according to an embodiment.
FIG. 12 is a diagram for illustrating a UI representing a visual object which shows a portion of fingerprint enrollment completed according to an embodiment.
FIG. 13 is a diagram for illustrating a UI representing a three-dimensional (3D) guide for guiding a user's fingerprint input according to an embodiment.
FIG. 14 is a flowchart illustrating an operating method of an electronic device according to an embodiment.
FIG. 15 is a flowchart illustrating a process for completing fingerprint enrollment according to an embodiment.
FIG. 16 is a flowchart illustrating a process for a fingerprint enrollment operation according to an embodiment.
FIG. 17 is a diagram for illustrating comparing a fingerprint image acquired through a fingerprint sensor with a fingerprint image acquired through a camera in a fingerprint authentication mode according to an embodiment.
FIG. 18 is a flowchart illustrating a process for a fingerprint authentication operation according to an embodiment.
FIG. 19 is a conceptual diagram for illustrating a concept of controlling functions related to fingerprint enrollment and fingerprint authentication in an electronic device according to an embodiment.

In relation to descriptions of the drawings, like or similar reference numerals may be used for like or similar components.

### [Mode for the Invention]

Hereinafter, various embodiments of the disclosure are disclosed with reference to the attached drawings. However, it should be understood that it is not intended to limit the present disclosure to specific embodiments, but to embrace various modifications, equivalents, and/or alternatives of the embodiments of the present disclosure.

An electronic device according to various embodiments of the disclosure may include, for example, at least one of a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), a moving picture experts group (MPEG) 3 (MP3) player, a mobile medical device, a camera, or a wearable device. According to various embodiments, the wearable device may include at least one of an accessory type (e.g., a watch, a ring, a bracelet, an anklet, a necklace, glasses, a contact lens, or a head-mounted device (HMD)), a fabric or clothing integrated type (e.g., an electronic clothing), a body-mounted type (e.g., a skin pad or a tattoo), and a bio-implantable type (e.g., an implantable circuit).

In some embodiments, the electronic device may be a home appliance. The home appliance may include at least one of, for example, a television, a digital video disk (DVD) player, an audio, a refrigerator, an air-conditioner, a cleaner, an oven, a microwave oven, a washing machine, an air cleaner, a set-top box, a home automation control panel, a security control panel, a TV box, a game console, an electronic dictionary, an electronic key, a camcorder, or an electronic frame.

In an embodiment, the electronic device may include at least one of various medical devices (e.g., various portable medical measuring devices (a blood sugar measuring device, a heartbeat measuring device, a blood pressure measuring device, or a body temperature measuring device), magnetic resonance angiography (MRA), magnetic resonance imaging (MRI), computed tomography (CT), a scanning machine, or an ultrasonic wave device), a navigation device, a global navigation satellite system (GNSS), an event data recorder (EDR), a flight data recorder (FDR), a vehicle infotainment device, marine electronic equipment (e.g., a marine navigation device, or a gyro compass), avionics, a security device, an automotive head unit, an industrial or home robot, an automated teller's machine (ATM) of a financial institution, a point of sales (POS) of a store, or an Internet of things (IoT) device (e.g., a light bulb, various sensors, an electricity or gas meter, a sprinkler device, a fire alarm, a thermostat, a street light, a toaster, sports equipment, a hot water tank, a heater, a boiler, etc.).

According to an embodiment, the electronic device may include at least one of a unit of furniture or building/construction, an electronic board, an electronic signature receiving device, a projector, or various gauging devices (e.g., water supply, electricity, gas, or electric wave gauging device). In various embodiments, the electronic device may be a combination of one or more of the various devices described above. According to some embodiment, the electronic device may be a flexible electronic device. In addition, an electronic device according to an embodiment of this document is not limited to the foregoing devices, and may include a new electronic device according to technological development.

Currently, fingerprint enrollment process and fingerprint authentication process may be required to use fingerprints on mobile devices. In conventional mobile devices including a fingerprint sensor, through the fingerprint enrollment process, a template for the partial fingerprint entered by the fingerprint sensor may be saved, and during the fingerprint authentication process, the template for the partial fingerprint entered by the fingerprint sensor may be compared with the template saved during the enrollment process to perform authentication.

One of the current problems with conventional mobile devices including a fingerprint sensor may be that, during the enrollment process, users are only provided with the percentage of their fingerprints that have been enrolled, so it is currently difficult for users to determine which parts of their fingerprints have been entered through the fingerprint sensor and which parts have not. Moreover, if a template that is not registered because it is not entered through the fingerprint sensor (e.g., the edge of a fingerprint) is entered during subsequent fingerprint authentication, the fingerprint authentication will fail.

If some new templates are included in the authentication process, an improved method to store additional templates in the authentication template area to cope with the new area may be provided. However, since it is difficult for users to recognize exactly where their fingerprints are enrolled, there may still be parts that are not enrolled, and there may be a problem that previously registered templates are deleted due to limited storage capacity.

To solve the above problems in the prior art, an object of the disclosure to provide a user interface guide that shows which part of the fingerprint is currently being input through the fingerprint sensor when the user enrolls their fingerprint on the mobile device. Thus, the user can recognize which part of their fingerprint is currently entered when enrolling his fingerprint, and can change, update, and register a template of the entire fingerprint without missing parts, which significantly improves the success rate of subsequent fingerprint authentication.

In addition, it may be an object of the present disclosure to store a new fingerprint template utilizing the entire fingerprint during the fingerprint authentication process to support additional enrollment for parts not enrolled during the enrollment process, and to store and use the template efficiently without overlapping areas.

An electronic device according to an embodiment may include a camera. The electronic device includes a fingerprint sensor. The electronic device includes a display. The electronic device includes at least one processor. The electronic device includes memory storing instructions. wherein the instructions, when being executed by the at least one processor individually or collectively, cause the electronic device to obtain a first fingerprint image of a user through the camera. wherein the instructions, when being executed by the at least one processor individually or collectively, cause the electronic device to obtain a reference fingerprint image based on the first fingerprint image. wherein the instructions, when being executed by the at least one processor individually or collectively, cause the electronic device to generate fingerprint information of a plurality of areas of the reference fingerprint image, based on the reference fingerprint image. wherein the instructions, when being executed by the at least one processor individually or collectively, cause the electronic device to display on the display a first visual object for guiding fingerprint input of the user based on the reference fingerprint image and the fingerprint information. wherein the instructions, when being executed by the at least one processor individually or collectively, cause the electronic device to obtain a second fingerprint image of the user through the fingerprint sensor. wherein the instructions, when being executed by the at least one processor individually or collectively, cause the electronic device to identify a first area corresponding to a position of the second fingerprint image among the plurality of areas, based on at least one crop image corresponding to the second fingerprint image among crop images obtained based on the reference fingerprint image. wherein the instructions, when being executed by the at least one processor individually or collectively, cause the electronic device to determine whether the second fingerprint image is enrolled based on whether the fingerprint information of the first area includes the image corresponding to the second fingerprint image, based on a result of the determination. wherein the instructions, when being executed by the at least one processor individually or collectively, cause the electronic device to update the enrolled fingerprint image such that the enrolled fingerprint image includes the second fingerprint image. wherein the instructions, when being executed by the at least one processor individually or collectively, cause the electronic device to control the display to display a second visual object updating at least a partial area of the first visual object based on the first area.

Thus, according to the disclosure, the user may be guided to the partial image of the fingerprint entered through the fingerprint sensor in the entire fingerprint image, so that the user can naturally recognize that the fingerprint previously entered has been properly registered and which part still needs to be registered. This allows the entire fingerprint to be enrolled without missing parts, resulting in improved authentication results during fingerprint authentication.

Further, according to the disclosure, the user can check the location of the partial fingerprint input through the fingerprint sensor, so that the entire fingerprint data can be input and registered even if the fingerprint sensor size is smaller. This may have a positive impact on improving authentication rate results during subsequent fingerprint authentication.

Furthermore, according to the disclosure, by registering partial fingerprint templates based on the entire fingerprint image during fingerprint enrollment and authentication, duplicate templates can be minimized to reduce storage usage.

In addition, according to the disclosure, since the location of each partial template is known, the most suitable fingerprint template can be selected for each location, and the recognition rate can be improved by authenticating using said template.

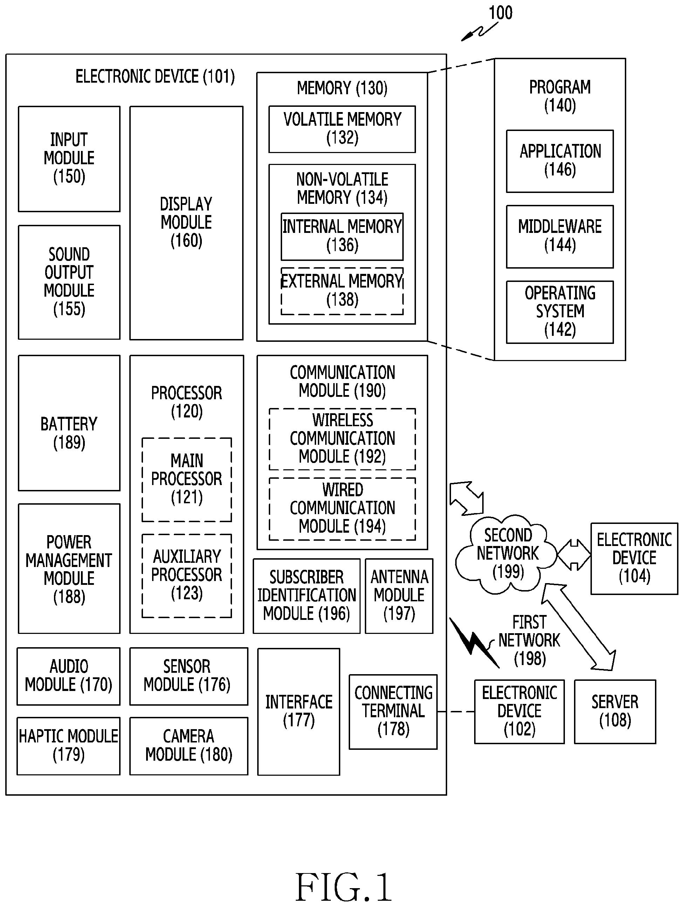

Hereinafter, an apparatus for applying or extending various embodiments disclosed herein is specified and extended with reference to FIG. 1.

FIG. 1 is a block diagram of an electronic device 101 in a network environment 100 according to various embodiments. Referring to FIG. 1, the electronic device 101 in the network environment 100 may communicate with an electronic device 102 over a first network 198 (e.g., a short-range wireless communication network), or may communicate with an electronic device 104 or a server 108 over a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, an audio output module 155, a display module 160, an audio module 170, a sensor module 176, an interface 177, a connection terminal 178, a haptic module 179, a camera module 180, a power management module 188, a battery 189, a communication module 190, a subscriber identification module 196, or an antenna module 197. In some embodiments, at least one (e.g., the connection terminal 178) of the components may be omitted, or one or more other components may be added in the electronic device 101. In some embodiments, some of the components (e.g., the sensor module 176, the camera module 180, or the antenna module 197) may be integrated as a single component (e.g., the display module 160).

The processor 120 may, for example, execute software (e.g., a program 140) to thus control at least one other component (e.g., a hardware or software component) of the electronic device 101 coupled to the processor 120, and perform various data processing or computation. According to an embodiment, as at least a part of the data processing or computation, the processor 120 may store a command or data received from other component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing device or an application processor) and an auxiliary processor 123 (e.g., a graphics processing device, a neural processing unit (NPU), an image signal processor, a sensor hub processor, or a communication processor) for operating independently from or in conjunction with the main processor 121. For example, if the electronic device 101 includes the main processor 121 and the auxiliary processor 123, the auxiliary processor 123 may be configured to use less power than the main processor 121, or to be specific to a specified function. The auxiliary processor 123 may be implemented as separate from, or as a part of the main processor 121.

The auxiliary processor 123 may control at least some of functions or states related to at least one component (e.g., the display module 160, the sensor module 176, or the communication module 190) of the components of the electronic device 101, for example, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signaling processor or a communication processor) may be implemented as a part of other component (e.g., the camera module 180 or the communication module 190) functionally related. According to an embodiment, the auxiliary processor 123 (e.g., the NPU) may include a hardware structure specified for artificial intelligence model processing. An artificial intelligence model may be generated by machine learning. Such learning may be performed, for example, by the electronic device 101 where the artificial intelligence is conducted, or via a separate server (e.g., the server 108). A learning algorithm may include, but not limited to, for example, supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more of them, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140), and input data or output data for a command related thereto. The memory 130 may include the volatile memory 132 or the non-volatile memory 134.

The program 140 may be stored as software in the memory 130, and may include, for example, an operating system 142, middleware 144 or an application 146.

The input module 150 may receive a command or data to be used by the component (e.g., the processor 120) of the electronic device 101 from the outside (e.g., the user) of the electronic device 101. The input module 150 may include, for example, a microphone, a mouse, a keyboard, a key (e.g., a button), or a digital pen (e.g., a stylus pen).

The audio output module 155 may output a sound signal to the outside of the electronic device 101. The audio output module 155 may include, for example, a speaker or a receiver. The speaker may be used for a general purpose such as multimedia playing or record playing, and the receiver may be used to receive an incoming call. According to an embodiment, the receiver may be implemented separately from, or as a part of the speaker.

The display module 160 may visually provide information to the outside (e.g., the user) of the electronic device 101. The display module 160 may include, for example, a display, a hologram device, or a projector and control circuitry for controlling a corresponding device. According to an embodiment, the display module 160 may include a touch sensor configured to detect a touch, or a pressure sensor configured to measure an intensity of force generated by the touch.

The audio module 170 may convert a sound into an electrical signal, or convert an electrical signal into a sound. According to an embodiment, the audio module 170 may obtain the sound via the input module 150, or output the sound via the audio output module 155, or an external electronic device (e.g., the electronic device 102) (e.g., a speaker or a headphone) directly or wirelessly connected with the electronic device 101.

The sensor module 176 may detect an operation state (e.g., a power or a temperature) of the electronic device 101, or an external environment state (e.g., a user state), and generate an electrical signal or a data value corresponding to the detected state. According to an embodiment, the sensor module 176 may include, for example, a gesture sensor, a gyro sensor, a barometric sensor, a magnetic sensor, an acceleration sensor, a grip sensor, a proximity sensor, a color sensor, an infrared (IR) sensor, a biosensor, a temperature sensor, a humidity sensor, or an illuminance sensor.

The interface 177 may support one or more designated protocols to be used for the electronic device 101 to connect with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector for physically connecting the electronic device 101 with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a motion) or an electrical stimulus which may be recognized by the user through tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least a part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable or a fuel cell.

The communication module 190 may support establishment of a direct (e.g., wired) communication channel or a wireless communication channel between the electronic device 101 and the external electronic device (e.g., the electronic device 102, the electronic device 104, or the server 108), and communication over the established communication channel. The communication module 190 may include one or more communication processors which are operated independently from the processor 120 (e.g., the application processor), and supports the direct (e.g., wired) communication or the wireless communication. According to an embodiment, the communication module 190 may include a wireless communication module 192 (e.g., a cellular communication module, a short-range wireless communication module, or a GNSS communication module) or a wired communication module 194 (e.g., a local region network (LAN) communication module, or a power line communication module). A corresponding communication module of these communication modules may communicate with the external electronic device via the first network 198 (e.g., a short-range communication network such as Bluetooth, wireless-fidelity (Wi-Fi) direct, or infrared data association (IrDA)) or the second network 199 (e.g., a long-range communication network such as a legacy cellular network, a 5th (5G) network, a next-generation communication network, Internet, or a computer network (e.g., a LAN or a wide region network (WAN)). These various communication modules may be integrated as a single component (e.g., a single chip), or may be implemented as a plurality of separate components (e.g., multiple chips). The wireless communication module 192 may identify and authenticate the electronic device 101 in the communication network such as the first network 198 or the second network 199 using subscriber information (e.g., international mobile subscriber identity (IMSI)) stored in the subscriber identification module 196.

The wireless communication module 192 may support a 5G network after a 4G network and a next-generation communication technology, for example, a new radio (NR) access technology. The NR access technology may support high-speed transmission of high-capacity data (enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band), to achieve, for example, a high data transmission rate. The wireless communication module 192 may support various technologies for securing performance in the high-frequency band, such as beamforming, massive multiple-input and multiple-output (MIMO), full-dimensional multiple-input and multiple-output (FD-MIMO), an array antenna, analog beamforming, or a large scale antenna. The wireless communication module 192 may support various requirements specified in the electronic device 101, the external electronic device (e.g., the electronic device 104), or a network system (e.g., the second network 199). According to an embodiment, the wireless communication module 192 may support a peak data rate for realizing the eMBB (e.g., 20 Gbps or more), loss coverage for realizing the mMTC (e.g., 164 dB or less), or U-plane latency for realizing the URLLC (e.g., 0.5 ms or less for each of downlink (DL) and uplink (UL), or 1 ms or less for round trip).

The antenna module 197 may transmit or receive a signal or the power to or from the outside (e.g., the external electronic device). According to an embodiment, the antenna module 197 may include an antenna including a radiator including a conductive material or a conductive pattern formed on a substrate (e.g., a printed circuit board (PCB)). According to an embodiment, the antenna module 197 may include a plurality of antennas (e.g., array antennas). In this case, at least one antenna appropriate for a communication scheme used in the communication network such as the first network 198 or the second network 199 may be selected, for example, by the communication module 190 from the plurality of antennas. The signal or the power may be transmitted or received between the communication module 190 and the external electronic device via the at least one antenna selected. According to some embodiment, other component (e.g., a radio frequency integrated circuit (RFIC)) than the radiator may be additionally formed as a part of the antenna module 197. According to various embodiments, the antenna module 197 may form an mmWave antenna module. According to an embodiment, the mmWave antenna module may include a printed circuit board, an RFIC disposed on or adjacent to a first surface (e.g., a bottom surface) of the printed circuit board and supporting a designated high frequency band (e.g., the mmWave band), and a plurality of antennas (e.g., array antennas) disposed on or adjacent to a second surface (e.g., a top surface or a side surface) of the printed circuit board and transmitting or receiving signals of the designated high frequency band.

At least some of the components may be connected mutually and exchange signals (e.g., commands or data) therebetween through an inter-peripheral communication scheme (e.g., a bus, general purpose input and output (GPIO), serial peripheral interface (SPI), or mobile industry processor interface (MIPI)).

According to an embodiment, a command or data may be transmitted or received between the electronic device 101 and the external electronic device 104 via the server 108 connected to the second network 199. The external electronic device 102 or 104 may be a device of the same or different type as or from the electronic device 101. According to an embodiment, all or some of operations executed at the electronic device 101 may be carried out at one or more of the external electronic devices 102, 104, or 108. For example, if the electronic device 101 needs to perform a function or a service automatically, or in response to a request from the user or other device, the electronic device 101 may request the one or more external electronic devices to perform at least a part of the function or the service, instead of or in addition to executing the function or the service. The one or more external electronic devices receiving the request may perform at least a part of the function or the service requested, or an additional function or service related to the request, and provide a result of the execution to the electronic device 101. The electronic device 101 may provide the result as at least a part of a response to the request, without or with further processing of the result. For doing so, for example, cloud computing, distributed computing, mobile edge computing (MEC), or client-server computing technology may be used. The electronic device 101 may provide an ultra-low delay service using, for example, the distributed computing or the MEC. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to an intelligent service (e.g., smart home, smart city, smart car, or healthcare) based on a 5G communication technology and an IoT-related technology.

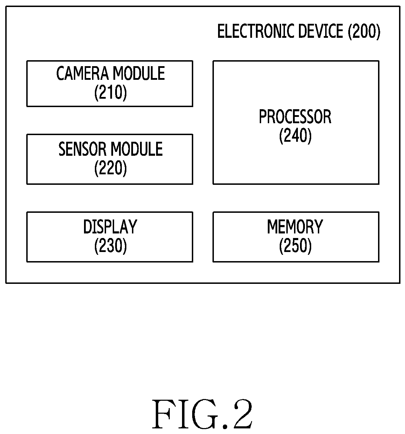

FIG. 2 is a block diagram illustrating a configuration of an electronic device 200 according to an embodiment. The electronic device 200 of FIG. 2 may refer to the electronic device 101 of FIG. 1.

Referring to FIG. 2, the electronic device 200 according to an embodiment may include a camera module 210 (e.g., the camera module 180 of FIG. 1), a sensor module 220 (e.g., the sensor module 176 of FIG. 1), a display 230 (e.g., the display module 160 of FIG. 1) and a processor 240 (e.g., the processor 1200 of FIG. 1). However, the components of the electronic device 200 are not limited thereto. For example, the electronic device 200 may omit at least one of the components described above, or may further include at least one other component. For example, the electronic device 200 may further include a memory 250 (e.g., the memory 130 of FIG. 1), a touch screen (not shown), a battery (e.g., the battery 189 of FIG. 1), a circuit board (not shown) and/or a communication module (e.g., the communication module 190 of FIG. 1).

According to an embodiment, the electronic device 200 may capture a subject through the camera module 210. For example, the electronic device 200 may acquire an image through the camera module 210. For example, the electronic device 200 may acquire an image of a user's finger through the camera module 210. However, it is not limited thereto. For example, the camera module 210 may take an image and a video of the user's finger. In the disclosure, the camera module 210 may be referred to as a camera.

According to an embodiment, the camera module 210 may include at least one lens assembly (not shown), at least one image sensor (not shown), at least one image stabilizer (not shown), at least one image signal processor (not shown), a memory and/or at least one flash (not shown). In an embodiment, the at least one lens assembly may collect light emitted from the subject to be captured. For example, the at least one lens assembly may collect light emitted from the user's finger (or, the fingerprint of the user). The at least one lens assembly may include one or more lenses. According to an embodiment, the camera module 210 may include a plurality of lens assemblies. In this case, the camera module 210 may form, for example, a dual camera, a 360-degree camera, or a spherical camera. Some of the plurality of lens assemblies may have the same lens properties (e.g., an angle of view, a focal length, autofocusing, an f number, or an optical zoom), or at least one of the lens assemblies may have one or more lens properties different from the lens properties of the other lens assemblies. The lens assembly may include, for example, a wide-angle lens or a telephoto lens.

According to an embodiment, the flash may emit light used to enhance the light emitted or reflected from the subject. According to an embodiment, the flash may include one or more light emitting diodes (e.g., a red-green-blue (RGB) LED, a white LED, an infrared LED, or an ultraviolet LED), or a xenon lamp. The image sensor may convert the light emitted or reflected from the subject and transmitted through the lens assembly into an electrical signal, and thus acquire an image corresponding to the subject. According to an embodiment, the image sensor may include one image sensor selected from image sensors having different properties, for example, an RGB sensor, a black and white (BW) sensor, an IR sensor, or an ultraviolet (UV) sensor, a plurality of image sensors having the same properties, or a plurality of image sensors having different properties. Each image sensor included in the image sensor may be implemented using, for example, a charged coupled device (CCD) sensor or a complementary metal oxide semiconductor (CMOS) sensor.

According to an embodiment, the image stabilizer may, in response to a movement of the camera module 210 or the electronic 200 including the same, move at least one lens or image sensor included in the lens assembly in a specific direction or control an operational attribute of the image sensor (e.g., adjust a read-out timing). This may compensate for at least part of a negative effect by the movement on the captured image. According to an embodiment, the image stabilizer may detect such a movement of the camera 210 or the electronic device 200 using a gyro sensor (not shown) or an acceleration sensor (not shown) disposed inside or outside the camera module 210. According to an embodiment, the image stabilizer may be implemented, for example, with an optical image stabilizer. The memory may at least temporarily store at least a part of the image obtained through the image sensor for a subsequent image processing task. For example, if the image capturing is delayed due to shutter lag or multiple images are quickly captured, an original image acquired (e.g., a Bayer-patterned image or a high-resolution image) may be stored in the memory, and its corresponding copy image (e.g., a low-resolution image) may be previewed through the display 230. Next, if a designated condition is satisfied (e.g., a user input or a system command), at least a part of the original image stored in the memory may be obtained and processed, for example, by the image signal processor. According to an embodiment, the memory may be configured as at least a part of the memory 250, or as a separate memory operated independently.

According to an embodiment, the image signal processor may perform one or more image processing on an image obtained through the image sensor 230 or an image stored in the memory. The one or more image processing may include, for example, depth map generation, 3D modeling, panorama generation, feature point extraction, image synthesizing, or image compensation (e.g., noise reduction, resolution adjustment, brightness adjustment, blurring, sharpening, or softening). Additionally or alternatively, the image signal processor may control (e.g., control exposure time, or control read-out timing) at least one (e.g., the image sensor) of the components included in the camera module 210. The image processed by the image signal processor may be stored back in the memory for further processing, or may be provided to an external component (e.g., the memory 250, the display 230, the electronic device 200, or the server) of the camera module 210. According to an embodiment, the image signal processor may be configured as at least a part of the processor 240, or as a separate processor operated independently from the processor 240. If the image signal processor is configured as the separate processor from the processor 240, at least one image processed by the image signal processor may be displayed on the display 230 as it is or after further image processing by the processor.

According to an embodiment, the electronic device 200 may include a plurality of camera modules 210 each having different properties or capabilities. In this case, for example, at least one of the plurality of camera modules 210 may be a wide-angle camera, and at least another may be a telephoto camera. Similarly, at least one of the plurality of camera modules 210 may be a front camera, and at least another one of the plurality of camera modules 210 may be a rear camera.

According to an embodiment, the camera module 210 may be a separate camera module 210 operated independently of the camera included in the sensor module 220.

According to an embodiment, the sensor module 220 may include a fingerprint sensor. The electronic device 200 may acquire a user's fingerprint image via the fingerprint sensor. The fingerprint sensor may acquire fingerprint information of the user using a capacitive scheme. For example, the fingerprint sensor may acquire the fingerprint using a principle that a portion (a ridge) of the fingerprint touching an electrode is detected, and a portion (a valley) of the fingerprint not touching is not detected. However, it is not limited thereto. For example, the fingerprint sensor may acquire the fingerprint information using at least one of an optical scheme or an ultrasonic scheme. For example, the optical scheme may acquire the user's fingerprint by capturing a fingerprint image using a photosensitive diode. For example, the ultrasonic scheme may generate ultrasonic waves through a piezoelectric device, and acquire the user's fingerprint by using a path difference of the ultrasonic waves striking and reflecting off the ridges and the valleys of the fingerprint.

According to an embodiment, a sensor array of the fingerprint sensor may include a plurality of lines for receiving fingerprint images. The at least one processor 240 may calculate a fingerprint input speed by checking image overlapping received for each line of the sensing array. The at least one processor 240 may extract the original image of the fingerprint by removing the duplicate fingerprint images for each line.

According to an embodiment, the sensor module 220 may include a touch sensor (not shown) for detecting contact of a user's body part, and receiving a touch input from the user, and/or a pressure sensor (not shown) for receiving an input of the user pressing (or, clicking) a button of the electronic device.

According to an embodiment, the electronic device 200 may include a touch screen (not shown). The touch screen may perform an input function and a display function. For doing so, the touch screen may include a touch panel and the display 230.

According to an embodiment, the touch panel may include a touch sensing sensor of a capacitive overlay type, a resistive overlay type, or an IR beam type, or may be configured with a pressure sensor. Besides the above sensors, any kind of the sensor device for detecting contact or pressure of an object may be used for the touch panel of the embodiment. The touch panel may detect a user's touch input, and generate and transmit a detection signal to the processor 240. The detection signal may include coordinate data of the user's touch. If the user inputs a touch position movement action, the touch panel may generate and transmit to the processor 240 a detection signal including coordinate data of a touch position movement path.

According to an embodiment, the display 230 may be formed of a liquid crystal display (LCD), an organic LED (OLED), or an active matrix OLED (AMOLED), and may visually provide the user with a menu of the electronic device 200, inputted data, function setting information and other various information. For example, the display 430 may display a visual object for guiding the user in the fingerprint input.

According to an embodiment, the touch screen may include a fingerprint sensing area of the fingerprint sensor in at least a partial area or the entire area of the touch panel or the display 230. For example, the fingerprint sensing area of the fingerprint sensor may be disposed through printing or etching on a surface of a cover glass provided over the display 230 to protect it. The fingerprint sensing area of the fingerprint sensor may be disposed on or under the touch panel. The fingerprint sensing area of the fingerprint sensor may be disposed inside pixels of the touch panel or in a black masking area between the pixel and the pixel.

According to an embodiment, the electronic device 200 may include at least one processor 240. The at least one processor 240 may be electrically and/or operatively coupled with various configurations of the electronic device 200. For example, the at least one processor 240 may be connected with the camera module 210, the sensor module 220, the display 230 and/or the memory 250.

According to an embodiment, the at least one processor 240 may perform functions of controlling the overall operation of the electronic device 200 and a signal flow between internal components, and processing data. The processor 240 may include, for example, a central processing unit (CPU), an application processor, and a communication processor. The processor 240 may be formed of a single-core processor or a multi-core processor, and may include a plurality of processors.

According to an embodiment, the at least one processor 240 may acquire a fingerprint image (e.g., a first fingerprint image) of the user through the camera module 210. For example, the at least one processor 240 may acquire the fingerprint image of the user via the camera module 210, in response to a fingerprint enrollment mode being executed. In an example, the fingerprint image acquired via the camera module 210 may include a whole fingerprint image. Based on the first fingerprint image, the at least one processor 240 may obtain a reference fingerprint image. For example, the at least one processor 240 may acquire the reference fingerprint image using a first artificial intelligence model trained to convert the fingerprint image acquired via the camera module 210 into the reference fingerprint image. In an example, the at least one processor 240 may acquire crop images based on the reference fingerprint image. The crop images may include a partial fingerprint image including one area of the fingerprint image.

According to an embodiment, the at least one processor 240 may generate fingerprint information of a plurality of areas of the reference fingerprint image, based on the reference fingerprint image. The fingerprint information of the plurality of areas of the reference fingerprint image may include fingerprint information of each of the plurality of areas. For example, based on the reference fingerprint image, the at least one processor 240 may generate fingerprint information of each of a plurality of grid areas segmenting the reference fingerprint image. In an example, the at least one processor 240 may generate a visual object for guiding the user's fingerprint input by using the fingerprint information. The at least one processor 240 may display the generated visual object on the display 230.

According to an embodiment, the at least one processor 240 may acquire a fingerprint image (e.g., a second fingerprint image) of the user through the fingerprint sensor. In an example, the fingerprint image obtained via the fingerprint sensor may include a partial fingerprint image. However, it is not limited thereto.

According to an embodiment, based on the crop images obtained based on the at least one reference fingerprint image, the at least one processor 240 may identify a area corresponding to the position of the fingerprint image acquired through the fingerprint sensor among the plurality of areas of the reference fingerprint image. For example, based on at least one crop image corresponding to the fingerprint image acquired via the fingerprint sensor among the crop images, the at least one processor 240 may identify a area corresponding to the position of the fingerprint image acquired via the fingerprint sensor among the plurality of areas of the reference fingerprint image.

According to an embodiment, the at least one processor 240 may determine whether the fingerprint image acquired through the fingerprint sensor is enrolled based on whether the fingerprint information of the identified area includes an image corresponding to the fingerprint image acquired through the fingerprint sensor. For example, the at least one processor 240 may determine whether the fingerprint image acquired via the fingerprint sensor is included in the enrolled fingerprint image.

According to an embodiment, based on a determination result, the at least one processor 240 may update the enrolled fingerprint image such that the enrolled fingerprint image includes the fingerprint image acquired through the fingerprint sensor. For example, as the result of the determination, the at least one processor 240 may update the enrolled fingerprint image such that the enrolled fingerprint image includes the fingerprint image acquired through the fingerprint sensor, based on not including the image corresponding to the fingerprint image acquired through the fingerprint sensor in the fingerprint information of the identified area (e.g., based on not including the fingerprint image acquired through the fingerprint sensor in the enrolled fingerprint image).

According to an embodiment, the at least one processor 240 may control the display 230 to display a visual object updating at least a partial area of the visual object based on the identified area. In an example, the at least one processor 240 may control the display 230 to display a visual object updating at least a partial area of the visual object corresponding to the identified area. For example, the at least one processor 240 may control the display 230 to display a visual object updating at least a partial area of the visual object corresponding to a area other than the identified area among the plurality of areas of the reference fingerprint image. Hence, the user may easily obtain which area of the fingerprint is enrolled.

According to an embodiment, the memory 250 performs a function of storing programs for processing and controlling the processor 240, an operating system (OS), various applications and input/output data, and may store a program for controlling the overall operation of electronic device 200. The memory 250 may store a user interface (UI) provided by the electronic device 200 and various configuration information required for processing functions in the electronic device 200.

According to an embodiment, the memory 250 may store various programs and data related to the fingerprint recognition function, based on the fingerprint sensor of the electronic device 200. For example, the memory 250 may store a program for processing a function according to a line scan scheme or an area scan scheme of the fingerprint sensor and data processed by the program. The memory 250 may store the user's fingerprint (e.g., a user's fingerprint image) recognized in a touch manner or a swipe manner. The fingerprint image stored in the memory 250 may be used to identify whether a fingerprint recognized later through the fingerprint sensor matches.

According to an embodiment, the electronic device 200 may include a battery (not shown). The battery may be electrically connected to the components of the electronic device 200. The battery may provide the power to the components of the electronic device 200. For example, the battery may supply the power to the camera module 210, the sensor module 220, and/or the display 230 of the electronic device 200.

According to an embodiment, the electronic device 200 may include a circuit board (e.g., a PCB, a printed board assembly (PBA), a flexible PCB (FPCB) or a rigid-flexible PCB (RFPCB)) which accommodates components for driving the electronic device 200. For example, the circuit board (not shown) may include at least one integrated circuit chip. At least one of the processor 240, the memory 250, a power management module (e.g., the power management module 188 of FIG. 1) or a communication module (e.g., the communication module 190 of FIG. 1) may be provided on the integrated circuit chip.

According to an embodiment, the circuit board (not shown) may be disposed within the electronic device 200. For example, the circuit board may include a first circuit board and a second circuit board. According to an embodiment, the communication module may be mounted on the first circuit board, and the processor 240 may be mounted on the second circuit board. According to an embodiment, the circuit board may be electrically connected to the battery through a power transfer structure. According to an embodiment, the circuit board may be an interposer board.

According to an embodiment, the electronic device 200 may include the communication module (e.g., the communication module 190 of FIG. 1). The electronic device 200 may communicate with an external device using the communication module. For example, the electronic device 200 may transmit or receive the user's fingerprint information and/or information related to the fingerprint information to or from the external device (e.g., the external electronic device 102 or 104 of FIG. 1 or the server 108 of FIG. 1) by using the communication module. For example, the electronic device 200 may transmit the acquired user's fingerprint information to the external device 102, 104, or 108, or receive the user's fingerprint information from the external device. However, it is not limited thereto.

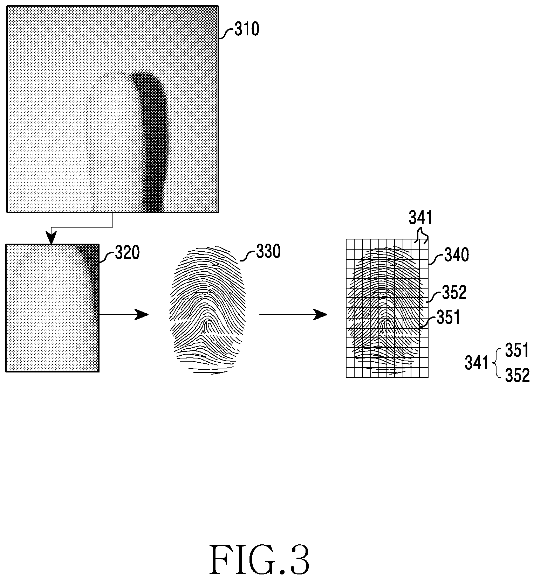

FIG. 3 is a diagram for illustrating generating fingerprint information based on a fingerprint image acquired through a camera module according to an embodiment.

Content of FIG. 3 may refer to the contents of FIG. 1 through FIG. 2. The same terms and/or the same reference numerals are used for the same or substantially the same configurations of the foregoing.

Referring to FIG. 3, at least one processor (e.g., the processor 240 of FIG. 2) may acquire a finger image 310 through a camera module (e.g., the camera module 210 of FIG. 2). For example, the at least one processor may acquire the finger image 310 including a user's fingerprint image. In an example, the at least one processor may acquire the finger image 310 via the camera module in a trust execution environment (TEE), in response to executing the fingerprint enrollment mode. For example, the finger image 310 may be acquired through a secure camera. However, it is not limited thereto. For example, the at least one processor may acquire the finger image 310 through the camera module in a physically separated secure environment (e.g., an embedded secure element (eSE) or a secure processor).

According to an embodiment, the at least one processor may obtain an image of one finger of the user. However, it is not limited thereto. For example, the at least one processor may acquire images of a plurality of fingers of the user at once through the camera module. For example, the at least one processor may acquire fingerprints images of the plurality of fingers of the user at one time.

In one example, the at least one processor may acquire a plurality of images or videos of a user's finger motion through the camera module. For example, the at least one processor may acquire a plurality of images or videos capturing one finger of the user from various angles. The at least one processor may select at least one image of the plurality of images, or a video capture image. For example, the at least one processor may select an image satisfying a designated condition (e.g., if clarity of the image is equal to or greater than a threshold value, if including the fingerprint) from the plurality of images, or a capture image satisfying the designated condition from the video capture images. In one example, the at least one processor may generate an image sequentially applying the user's fingerprint through an image panorama function.

According to an embodiment, the at least one processor may acquire a first fingerprint image 320 via the camera module. For example, the at least one processor may acquire the first fingerprint image 320 including a fingerprint portion, based on the finger image 310 acquired via the camera module. For example, the at least one processor may acquire the first fingerprint image 320 which is a fingerprint area of the finger image 310. For example, the at least one processor may obtain the first fingerprint image 320 through a process of removing other area than the fingerprint area in the finger image 310. In one example, the at least one processor may acquire the first fingerprint image 320 through the camera module in the TEE, in response to executing the fingerprint enrollment mode. For example, the first fingerprint image 320 may be acquired through the secure camera. However, it is not limited thereto. For example, the at least one processor may acquire the first image 320 through the camera module in the physically separated secure environment (e.g., an eSE or a secure processor). In one example, acquiring the fingerprint image 320 based on the finger image 310 may be omitted. For example, the at least one processor may acquire the first fingerprint image 320 including only the fingerprint area of the finger through the camera module.

According to an embodiment, the at least one processor may obtain a reference fingerprint image 330, based on the first fingerprint image 320. For example, the at least one processor may obtain the reference fingerprint image 330 using a first artificial intelligence model trained to convert the first fingerprint image 320 into the reference fingerprint image 330. For example, the at least one processor may obtain the reference fingerprint image 330 using the first artificial intelligence model trained to convert the first fingerprint image 320 into the reference fingerprint image 330 which is similar to the fingerprint image obtained via the fingerprint sensor. In one example, the at least one processor may obtain the reference fingerprint image 330, based on the first fingerprint image 320, in the TEE. However, it is not limited thereto. For example, the at least one processor may obtain the reference fingerprint image 330, based on the first fingerprint image 320, in the physically separated secure environment (e.g., an eSE or a secure processor).

According to an embodiment, the at least one processor may generate fingerprint information 340 of a plurality of areas 341 of the reference fingerprint image 330, based on the reference fingerprint image 330. The fingerprint information 340 may include fingerprint information of each of the plurality of areas 341. In one example, the at least one processor may generate a plurality of grid areas which segment the reference fingerprint image 330. The plurality of areas 341 may correspond to the plurality of grid areas which segment the reference fingerprint image 330. For example, the fingerprint information 340 of each of the plurality of areas 341 may include fingerprint information of each of the grid areas. In one example, the fingerprint information 340 of the plurality of areas 341 of the reference fingerprint image 330 may include fingerprint information in the form of a map. For example, the fingerprint information 340 may include an image map or a grid map. In one example, the at least one processor may generate the fingerprint information 340 of the plurality of areas 341 of the reference fingerprint image 330, based on the reference fingerprint image 330, in the TEE. However, it is not limited thereto. For example, in the physically separated secure environment (e.g., an eSE or a secure processor), the at least one processor may generate the fingerprint information 340 of the plurality of areas 341 of the reference fingerprint image 330, based on the reference fingerprint image 330.

In one example, the fingerprint information 340 of the plurality of areas 341 may include information of whether a corresponding area is a fingerprint area, position information of the area, size information of the area, shape information of the area, information of whether the fingerprint image (the fingerprint image obtained from the fingerprint sensor) corresponding to the corresponding area is enrolled, and/or quality information of the fingerprint image (the fingerprint image obtained from the fingerprint sensor) corresponding to the corresponding area. For example, referring to FIG. 3, the fingerprint information 340 may include information that a first area 351 is included in the fingerprint area, and information that a second area 352 is included in a non-fingerprint area.

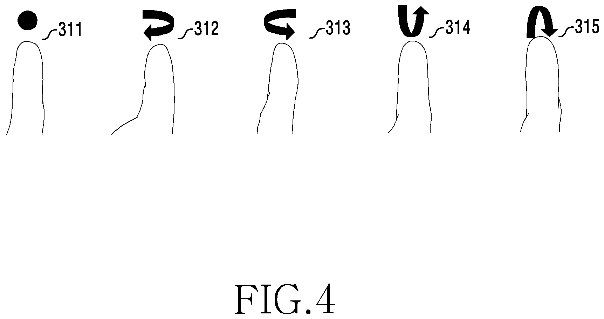

FIG. 4 is a diagram for illustrating a UI for acquiring a fingerprint image through a camera module according to an embodiment.

Content of FIG. 4 may refer to the contents of FIG. 1, FIG. 2, and/or FIG. 3. The same term is used for the same or substantially the same component as described above.

According to an embodiment, at least one processor (e.g., the at least one processor 240 of FIG. 2) may guide a user's action to acquire a fingerprint image (e.g., the first fingerprint image 320 of FIG. 3) (or, a finger image (e.g., the finger image 310 of FIG. 3)) through a camera module (e.g., the camera module 210 of FIG. 2). For example, referring to FIG. 4, the at least one processor may display a visual object for guiding the user's action to acquire the fingerprint image on a display (e.g., the display 230 of FIG. 2). For example, the at least one processor may display the visual object for guiding to capture the user's fingerprint from various angles on the display.

Referring to FIG. 4, for example, the at least one processor may control the display to display a first visual object 311 guiding to capture a front of the user's fingerprint, a second visual object 312 and a third visual object 313 guiding to capture sides of the user's finger, and a fourth visual object 314 and a fifth visual object 315 guiding to capture a top of the user's finger. However, it is not limited thereto. For example, the at least one processor may control the display to display a visual object for guiding to capture a plurality of fingers of the user at once. By capturing the plurality of fingers of the user at once, the at least one processor may acquire a plurality of finger images (e.g., fingerprint images) of the user at one time.

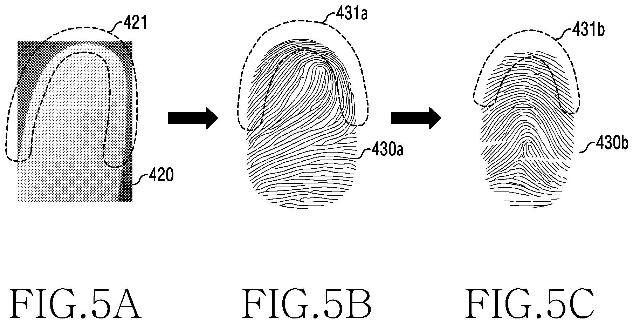

FIG. 5 is a diagram for illustrating modifying a distorted portion of a fingerprint image using an artificial intelligence model according to an embodiment.

Content of FIG. 5 may refer to the contents of FIG. 1, FIG. 2, FIG. 3, and/or FIG. 4 mentioned above. The same term is used for the same or substantially the same configuration as described above.

Referring to FIG. 5, at least one processor (e.g., the at least one processor 240 of FIG. 2) may obtain a second reference fingerprint image 430b using a second artificial intelligence model trained to modify a distorted portion 421 of a first fingerprint image 420. For example, referring to (a) of FIG. 5, the distorted portion 421 may include a curved portion of the finger such as a side of the finger, an edge of the finger, and/or a top of the finger. In one example, the distorted portion 421 may include a portion captured to be narrower in spacing between fingerprints or to be more deformed in the fingerprint than the actual fingerprint (or, the fingerprint images obtained through the fingerprint sensor). Hereafter, while the first AI model and the second AI model are described individually, the first AI model and the second AI model may be implemented as a single AI model.

According to an embodiment, the at least one processor may obtain a first reference fingerprint image 430a using the first artificial intelligence model trained to convert the first fingerprint image 420 into the first reference fingerprint image 430a. Referring to (b) of FIG. 5, the first reference fingerprint image 430a may include a first portion 431a corresponding to the distorted portion 421 of the first fingerprint image 420.

According to an embodiment, the at least one processor may obtain the second reference fingerprint image 430b, using the second artificial intelligence model trained to alter the first portion 431a of the first reference fingerprint image 430a. For example, the at least one processor may input the fingerprint image obtained through the camera module and the fingerprint image obtained through the fingerprint sensor to the second artificial intelligence model, generate a first parameter based on the fingerprint image obtained through the camera module and the fingerprint image obtained through the fingerprint sensor using the second artificial intelligence model, and obtain the second reference fingerprint image 430b in which the first portion 431a of the first reference fingerprint image 430a is modified based on the first parameter.

Referring to (c) of FIG. 5, the second reference fingerprint image 430b may include a second portion 431b in which the first portion 431a of the first reference fingerprint image 430a is altered. For example, the first portion 431a may include a distorted portion, and the second portion 431b may not include the distorted portion by modifying the distorted portion.

According to an embodiment, the at least one processor may acquire the second reference fingerprint image 430b using the second artificial intelligence model trained to alter the distorted portion 421 of the first fingerprint image 420, and accordingly the second reference fingerprint image 430b may correspond to the fingerprint image acquired via the fingerprint sensor. For example, the second portion 431b of the second reference fingerprint image 430b may have a fingerprint shape (e.g., an undistorted fingerprint shape) similar to the fingerprint shape of the portion of the fingerprint image acquired through the fingerprint sensor corresponding to the second portion 431b.

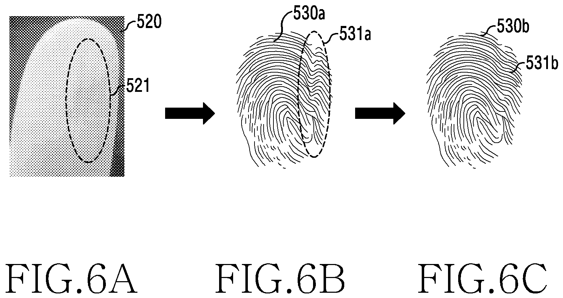

FIG. 6 is a diagram for illustrating removing a deformed portion of a fingerprint image using an artificial intelligence model according to an embodiment.

Content of FIG. 6 may refer to the contents of FIG. 1, FIG. 2, FIG. 3, FIG. 4 and/or FIG. 5 mentioned above. The same term is used for the same or substantially the same configuration as described above.

Referring to FIG. 6, at least one processor (e.g., the at least one processor 240 of FIG. 2) may obtain a fourth reference fingerprint image 530b using a third artificial intelligence model trained to remove (or modify) a deformed portion 521 of a first fingerprint image 520. For example, referring to (a) of FIG. 6, the deformed portion 521 may include a wrinkled portion of the finger. In one example, as the finger is wrinkled, the deformed portion 521 may include a portion in which the fingerprint is captured to be more deformed than the actual fingerprint (or, the fingerprint image obtained via the fingerprint sensor). In the following, the first AI model and the third AI model are described individually, but the first AI model and the third AI model may be implemented as a single AI model. In an example, at least two or more of the first AI model, the second AI model (e.g., the second AI model of FIG. 5) or the third AI model may be implemented in a single AI model.

According to an embodiment, the at least one processor may obtain a third reference fingerprint image 530a, using the first artificial intelligence model trained to convert the first fingerprint image 520 into the third reference fingerprint image 530a. For example, the at least one processor may input the fingerprint image acquired through the camera module and the fingerprint image acquired through the fingerprint sensor to the third artificial intelligence model, generate a second parameter based on the fingerprint image acquired through the camera module and the fingerprint image acquired through the fingerprint sensor by using the third artificial intelligence model, and obtain the fourth reference fingerprint image 530b in which a third portion 531a of the third reference fingerprint image 530a is removed (or, modified) based on the second parameter. Referring to (b) of FIG. 6, the third reference fingerprint image 530a may include the third portion 531a corresponding to the deformed portion 521 of the first fingerprint image 520.

According to an embodiment, the at least one processor may obtain the fourth reference fingerprint image 530b using the third artificial intelligence model trained to remove (or, alter) the third portion 531a of the third reference fingerprint image 530a. Referring to (c) of FIG. 6, the fourth reference fingerprint image 530b may include a fourth portion 531b in which the third portion 531a of the third reference fingerprint image 530a is removed (or, altered). For example, the third portion 531a may include the deformed portion, and the fourth portion 531b may not include the deformed portion by removing (or, altering) the deformed portion.

According to an embodiment, the at least one processor may obtain the fourth reference fingerprint image 530b using the third artificial intelligence model trained to remove (or, alter) the deformed portion 521 of the first fingerprint image 520, and accordingly the fourth reference fingerprint image 530b may correspond to the fingerprint image acquired via the fingerprint sensor. For example, the fourth portion 531b of the fourth reference fingerprint image 530b may have a fingerprint shape (e.g., an undistorted fingerprint shape) similar to the fingerprint shape of the portion of the fingerprint image acquired through the fingerprint sensor corresponding to the fourth portion 531b.

According to an embodiment, the at least one processor may obtain a fifth reference fingerprint image (e.g., a reference fingerprint image in which the distorted portion of the fingerprint image obtained via the camera module is altered, and the deformed portion of the fingerprint image is removed (or modified)) using a fourth artificial intelligence model trained to merge the second reference fingerprint image (e.g., the second reference fingerprint image 431b of FIG. 5) obtained using the second artificial intelligence model, and the fourth reference fingerprint image 531b obtained using the third artificial intelligence model. For example, the at least one processor may input the second reference fingerprint image 431b and the fourth reference fingerprint image 531b to the fourth artificial intelligence model, generate a third parameter based on the second reference fingerprint image 431b and the fourth reference fingerprint image 531b using the fourth artificial intelligence model, and obtain the fifth reference fingerprint image where the distorted portion of the fingerprint image obtained through the camera module is altered and the deformed portion is removed (or modified), based on the third parameter.

According to an embodiment, the at least one processor may generate fingerprint information of a plurality of areas of the fifth reference fingerprint image, based on the fifth reference fingerprint image. According to an embodiment, the at least one processor may obtain crop images, based on the fifth reference fingerprint image.

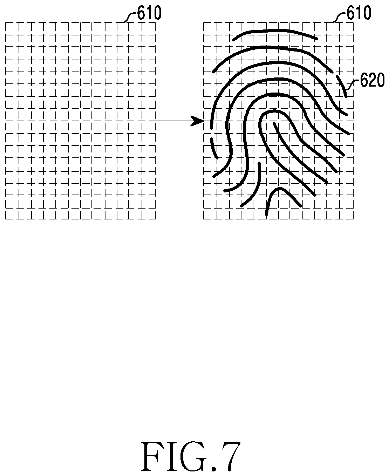

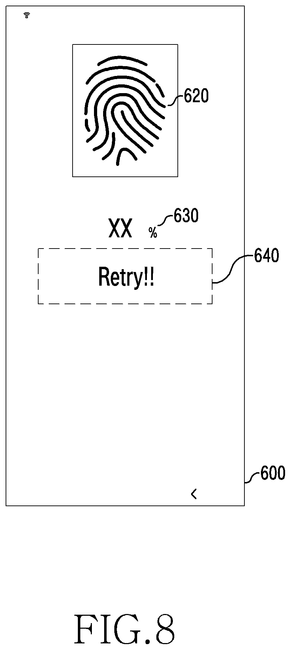

FIG. 7 is a diagram for illustrating a visual object for guiding user's fingerprint input according to an embodiment. FIG. 8 is a diagram for illustrating a UI representing a visual object for guiding user's fingerprint input according to an embodiment.

Contents of FIG. 7 and FIG. 8 may refer to the contents of FIG. 1, FIG. 2, FIG. 3, FIG. 4, FIG. 5 and/or FIG. 6. The same term is used for the same or substantially the same configuration as described above.

According to an embodiment, at least one processor (e.g., the processor 240 of FIG. 2) may display a first visual object 620 for guiding the user's fingerprint input on the display, based on the generated reference fingerprint image (e.g., the reference fingerprint image 330 of FIG. 3, the second reference fingerprint image 430b of FIG. 5, the fourth reference fingerprint image 530b or the fifth reference fingerprint image of FIG. 6), and the fingerprint information of the plurality of areas of the reference fingerprint image (e.g., the fingerprint information 340 of FIG. 3).

Hereafter, generating a guide screen for displaying the first visual object 620, based on the reference fingerprint image, and the fingerprint information of the plurality of areas of the reference fingerprint image shall be described, by referring to FIG. 7.

According to an embodiment, based on size information of the reference fingerprint image, the at least one processor may generate an image 610 including a grid area having substantially the same size as the size of the reference fingerprint image. The at least one processor may generate the visual object 620 corresponding to the size of the image 610.

According to an embodiment, based on shape information of the reference fingerprint image, the at least one processor may generate an image 610 including a grid area having substantially the same shape as the shape of the reference fingerprint image. The at least one processor may generate the visual object 620 corresponding to the shape of the image 610.

Hence, the visual object 620 may vary depending on the user. For example, the size and/or the shape of the visual object 620 may differ depending on the user.

According to an embodiment, the visual object 620 may include a user's actual fingerprint image and/or a graphical image.

Referring to FIG. 8, the at least one processor may display at least one visual object for guiding the user' fingerprint input on a screen 600. For example, the at least one processor may display a first visual object 620 on the screen 600. However, it is not limited thereto. For example, the at least one processor may display on the screen 600 a second visual object 630 indicating a percentage of the user's fingerprint enrolled and/or a third visual object 640 including text for guiding the user's fingerprint input.

According to an embodiment, the electronic device provides the user with the first visual object 620, and accordingly the user may identify which portion of the user's fingerprint is enrolled.

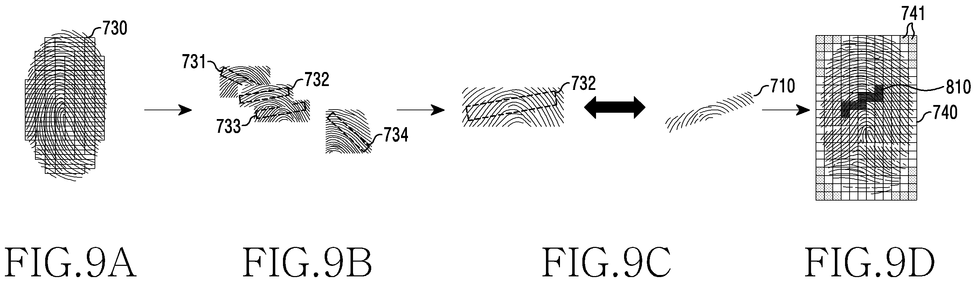

FIG. 9 is a diagram for illustrating identifying a area corresponding to a fingerprint image acquired through a fingerprint sensor according to an embodiment.

Content of FIG. 9 may refer to the contents of FIG. 1, FIG. 2, FIG. 3, FIG. 4, FIG. 5, FIG. 6, FIG. 7 and/or FIG. 8 mentioned above. The same term is used for the same or substantially the same configuration as described above.

Referring to (a) of FIG. 9, according to an embodiment, at least one processor (e.g., the processor 240 of FIG. 2) may obtain crop images 730, based on a reference fingerprint image (e.g., the reference fingerprint image 330 of FIG. 3, the second reference fingerprint image 430b of FIG. 5, the fourth reference fingerprint image 530b or the fifth reference fingerprint image of FIG. 6). In an example, the crop images 730 may have various positions and/or sizes respectively in the reference fingerprint image.

According to an embodiment, the at least one process may list at least one crop image included in the crop images 730. For example, referring to (b) of FIG. 9, the crop images 730 may include a first crop image 731, a second crop image 732, a third crop image 733 and a fourth crop image 734. However, it is not limited thereto. For example, the crop images 730 may omit the at least one crop image, or further include at least one crop image.

According to an embodiment, the at least one processor may compare the crop images with the fingerprint image (e.g., a second fingerprint image) acquired through the fingerprint sensor. For example, the at least one processor may determine whether a fingerprint image 710 acquired through the fingerprint sensor corresponds to at least one (e.g., the first crop image 731, the second crop image 732, the third crop image 733 and the fourth crop image 734) of the crop images 730. For example, referring to (c) of FIG. 9, the at least one processor may compare a fingerprint pattern of at least one crop image (e.g., the second crop image 732) included in the crop images 730 with a fingerprint pattern included in the fingerprint image 710 obtained via the fingerprint sensor.

According to an embodiment, in response to determining that the fingerprint image 710 acquired via the fingerprint sensor corresponds to at least one of the crop images, the at least one processor may obtain information of the fingerprint image 710 acquired via the fingerprint sensor, based on the crop image corresponding to the fingerprint image 710 acquired through the fingerprint sensor. For example, the at least one processor may obtain position information, size information, and/or rotation angle information of the fingerprint image 710 obtained via the fingerprint sensor, based on the second crop image 732 corresponding to the fingerprint image 710 obtained via the fingerprint sensor. For example, the at least one processor may compare the fingerprint image 710 and the second crop image 732. Based on a comparison result, the at least one processor may obtain magnitude information of the rotation angle of the fingerprint image 710 based on the second crop image 732.

According to an embodiment, based on the position information, the size information and/or the rotation angle information of the fingerprint image 710 acquired through the fingerprint sensor, the at least one processor may identify a area corresponding to the position of the fingerprint image 710 acquired via the fingerprint sensor among a plurality of areas 741 of the reference fingerprint image. For example, referring to (d) of FIG. 9, based on the information of the fingerprint image 710, the at least one processor may identify a first area 810 corresponding to the position of the fingerprint image 710 among the plurality of areas 741. In one example, the at least one processor may identify area corresponding to the fingerprint image 710 obtained via the fingerprint sensor, in the TEE. However, it is not limited thereto. For example, the at least one processor may perform identifying area corresponding to the fingerprint image 710 acquired via the fingerprint sensor, in a physically separated secure environment (e.g., an eSE or a secure processor),

According to an embodiment, the at least one processor may determine whether the fingerprint image 710 acquired via the fingerprint sensor is enrolled, based on whether the fingerprint information of the identified first area 810 in the fingerprint information 740 of the plurality of areas 741 includes an image corresponding to the fingerprint image 710 acquired via the fingerprint sensor. For example, the at least one processor may determine that the fingerprint image 710 is not enrolled, based on the fingerprint information of the first area 810 not including the image corresponding to the fingerprint image 710. For example, the at least one processor may determine that the fingerprint image 710 is enrolled, based on the inclusion in the fingerprint information of the first area 810.

According to an embodiment, the at least one processor may enroll the fingerprint image 710, based on the determination result. For example, based on determining that the fingerprint image 710 is not enrolled, the at least one processor may update the enrolled fingerprint image such that the enrolled fingerprint image includes the fingerprint image 710.

According to an embodiment, based on the above determination result, the at least one processor may store fingerprint data of the fingerprint image 710 in a memory (e.g., the memory 250 of FIG. 2).

According to an embodiment, the at least one processor may control the display to display a visual object which updates at least a partial area of the visual object based on the first area 810. For example, the at least one processor may control the display to display the visual object which updates at least a partial area of the visual object (e.g., the first visual object 620 of FIG. 8), based on the first area 810 corresponding to the position of the fingerprint image 710 included in the enrolled fingerprint image.

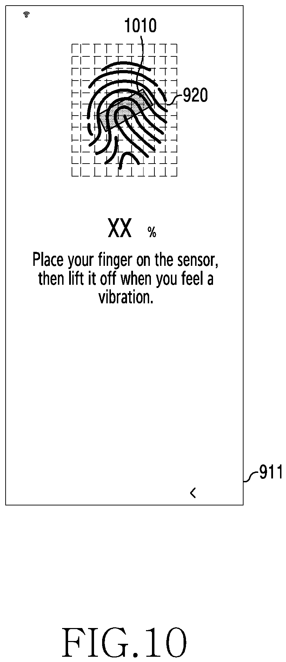

Displaying the updated visual object according to an embodiment shall be described in more detail in FIG. 10 through FIG. 12.

FIG. 10 is a diagram for illustrating a UI representing a visual object 920 which shows a area 1010 of fingerprint enrollment completed according to an embodiment.

Content of FIG. 10 may refer to the contents of FIG. 1, FIG. 2, FIG. 3, FIG. 4, FIG. 5, FIG. 6, FIG. 7, FIG. 8 and/or FIG. 9. At least the same term is used for the same, or substantially the same configuration as described above.

Referring to FIG. 9 and FIG. 10, according to an embodiment, at least one processor (e.g., the processor 240 of FIG. 2) may control the display to display a visual object updating at least a partial area of a visual object based on the first area 810. For example, the at least one processor may display on a screen 911 the visual object 920 updating the first area 1010 of the visual object, based on the first area 810 corresponding to the position of the fingerprint image 710 included in the enrolled fingerprint image. Hence, the user may identify the first area 1010 of the visual object as the enrolled fingerprint area of the user's fingerprint. However, it is not limited thereto. For example, although not depicted in FIG. 10, the at least one processor may display on the screen a visual object updating at least a partial area of the visual object corresponding to a second area object other than the first area 1010 among a plurality of areas (e.g., a plurality of grid areas), based on the first area 810 corresponding to the position of the fingerprint image 710 included in the enrolled fingerprint image. Thus, the user may identify the second area other than the first area 1010 of the visual object as the unenrolled fingerprint area of the user's fingerprint.

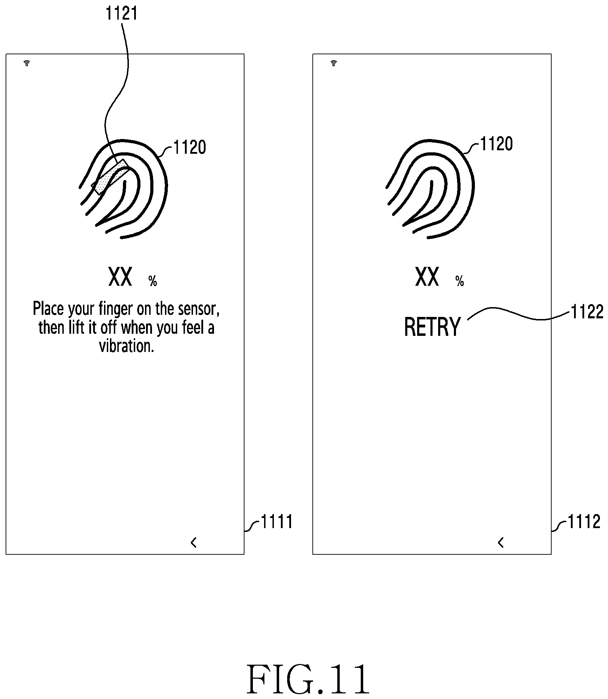

FIG. 11 is a diagram for illustrating a UI for guiding user's fingerprint input according to an embodiment.

Content of FIG. 11 may refer to the contents of FIG. 1, FIG. 2, FIG. 3, FIG. 4, FIG. 5, FIG. 6, FIG. 7, FIG. 8, FIG. 9 and/or FIG. 10 mentioned earlier. At least the same term is used for the same, or substantially the same configuration described above.

Referring to FIG. 9 and FIG. 10, the at least one processor (e.g., the processor 240 of FIG. 2) may update the enrolled fingerprint image such that the enrolled fingerprint image includes the fingerprint image 710, based on determining that the fingerprint image 710 is not enrolled.

According to an embodiment, based on the first area 810 corresponding to the position of the fingerprint image 710 included in the enrolled fingerprint image, the at least one processor may display on the screen 911 the visual object 920 updating the first area 1010 of the visual object.

Referring to FIG. 9 and FIG. 11, according to an embodiment, based on determining that the fingerprint image 710 is enrolled, the at least one processor may display a visual object 1122 including text to guide the user in re-inputting the fingerprint on a screen 1112. However, it is not limited thereto. For example, the at least one processor may display on the screen 1112 the visual object 1122 including the text guiding the user to re-input the fingerprint, based on determining that the user's fingerprint input does not satisfy a designated condition. For example, if a quality of the user's fingerprint input is lower a threshold value, if a touch input level for the user's fingerprint input is lower a threshold value, and/or if an error occurs in the fingerprint input or the fingerprint acquisition, the at least one processor may display on the screen 1112 the visual object 1122 including the text guiding the user to re-input the fingerprint.

According to an embodiment, based on determining that the user's fingerprint input does not satisfy the designated condition, the at least one processor may display on a screen 1111 a visual object 1120 updating a first area 1121 of the visual object based on the user's fingerprint input area not satisfying the designated condition. Hence, the user may identify the first area 1121 of the visual object 1120 as the area where the user's fingerprint input does not satisfy the designated condition.

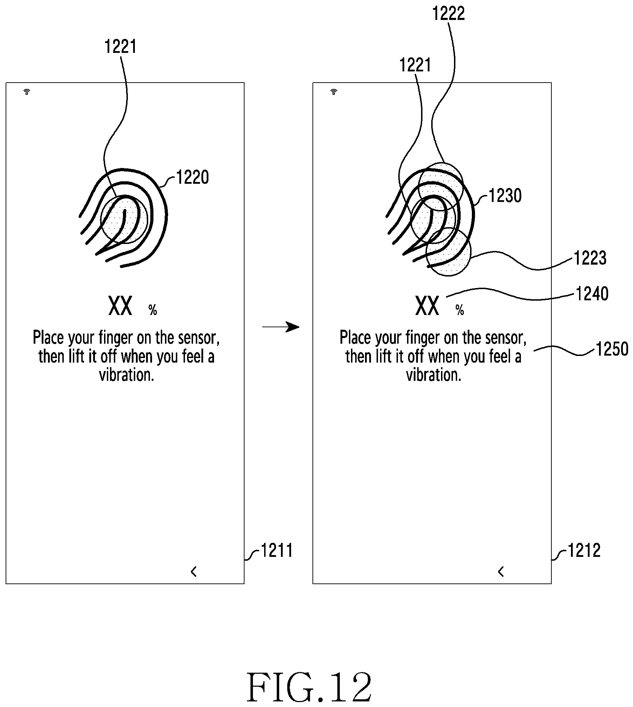

FIG. 12 is a diagram for illustrating a UI representing a visual object which shows a portion of fingerprint enrollment completed according to an embodiment.

Content of FIG. 12 may refer to the contents of FIG. 1, FIG. 2, FIG. 3, FIG. 4, FIG. 5, FIG. 6, FIG. 7, FIG. 8, FIG. 9, FIG. 10 and/or FIG. 11 mentioned above. At least the same term is used for the same, or substantially the same configuration described earlier.

Referring to FIG. 12, at least one processor (e.g., the processor 240 of FIG. 2) may display on a first screen 1211 a second visual object 1220 updating a first area 1221 of a first visual object, based on a area corresponding to a position of a fingerprint image (obtained from the fingerprint sensor) included in the enrolled fingerprint image.

According to an embodiment, the at least one processor may further acquire a fingerprint image of the user through the fingerprint sensor at least one or more times. According to an embodiment, the at least one processor may display on a second screen 1212 a third visual object 1230 further updating at least one area (e.g., a second area 1222 and/or a third area 1223) of a second visual object, based on at least one area corresponding to a position of the further acquired fingerprint image (the fingerprint image further acquired from the fingerprint sensor) included in the enrolled fingerprint image.

According to an embodiment, the at least one processor may display on the screen 1212 a fourth visual object 1240 indicating the enrollment percentage of the user's fingerprint and/or a fifth visual object 1250 including text to guide the user's fingerprint input. In one example, the fourth visual object 1240 may include the percentage that the fingerprint image acquired (inputted) through the fingerprint sensor matches in the fingerprint image acquired through the camera. In one example, the fifth visual object 1250 may include the text for guiding the user's fingerprint input (e.g., fingerprint re-input) based on the fingerprint enrollment percentage (e.g., the percentage of the fingerprint image included in the enrolled fingerprint image). For example, the at least one processor may display the fifth visual object 1250 including the text to guide the user's fingerprint input (e.g., fingerprint re-input) until the fingerprint enrollment percentage is greater than a threshold value (e.g., the percentage of the fingerprint image included in the enrolled fingerprint image is greater than the threshold value).

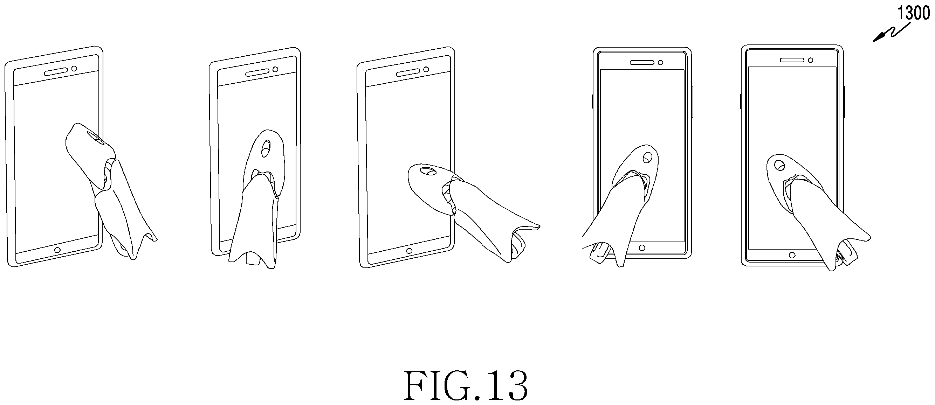

FIG. 13 is a diagram for illustrating a UI representing a 3D guide for guiding user's fingerprint input according to an embodiment.

Content of FIG. 13 may refer to the contents of FIG. 1, FIG. 2, FIG. 3, FIG. 4, FIG. 5, FIG. 6, FIG. 7, FIG. 8, FIG. 9, FIG. 10, FIG. 11 and/or FIG. 12 mentioned above. At least the same term is used for the same, or substantially the same configuration described above.

According to an embodiment, at least one processor (e.g., the processor 240 of FIG. 2) may display a visual object including a finger 3D model on the display. For example, the finger 3D model may show a area of the fingerprint enrolled and/or a area of the fingerprint unenrolled.

Referring to FIG. 13, according to an embodiment, the at least one processor may display on the display a visual object 1300 guiding a fingerprint input method. For example, the at least one processor may display on the display the visual objects 1300 guiding the fingerprint input method for the area of the fingerprint unenrolled and/or the area of the fingerprint not inputted. For example, the at least one processor may display the visual object including information relating to a posture for the user to input the fingerprint with respect to the area of the unenrolled fingerprint and/or the area of no fingerprint inputted, and/or information relating to the fingerprint input position with respect to the area of the unenrolled fingerprint and/or the area of no fingerprint inputted. In one example, the visual object 1300 may include at least one visual object in the form of the text, the 3D or the video. However, it is not limited thereto.

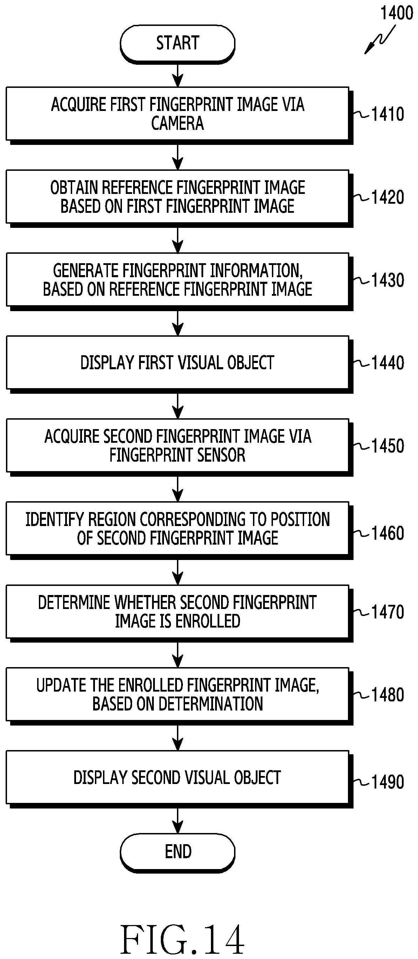

FIG. 14 is a flowchart illustrating an operating method of an electronic device according to an embodiment.

Content of FIG. 14 may refer to the contents of FIG. 1, FIG. 2, FIG. 3, FIG. 4, FIG. 5, FIG. 6, FIG. 7, FIG. 8, FIG. 9, FIG. 10, FIG. 11, FIG. 12, and/or FIG. 13 explained above.

Referring to FIG. 14, an operation method 1400 of an electronic device (e.g., the electronic device 200 of FIG. 2) according to an embodiment may include acquiring the first fingerprint image via the camera in operation 1410, obtaining the reference fingerprint image based on the first fingerprint image in operation 1420, generating the fingerprint information based on the reference fingerprint image in operation 1430, displaying the first visual object in operation 1440, acquiring the second fingerprint image via the fingerprint sensor in operation 1450, identifying the area corresponding to the position of the second fingerprint image in operation 1460, determining whether the second fingerprint image is enrolled in operation 1470, updating the enrolled fingerprint image in operation 1480, based on the determination result, and displaying the second visual object in operation 1490. However, the operation method 1400 of the electronic device is not limited thereto. For example, the operating method 1400 of the electronic device may omit at least one operation, or may further include at least one operation. The operating method 1400 of the electronic device is not limited to the above operation order.

According to an embodiment, in operation 1410, the at least one processor (e.g., the at least one processor 240 of FIG. 2) may acquire the first fingerprint image via the camera module (e.g., the camera module 210 of FIG. 2). In one example, the at least one processor may acquire the first fingerprint image, based on the finger image acquired through the camera module. Operation 1410 may refer to the contents relating to the finger image 310 and the first fingerprint image 320 of FIG. 3. According to an embodiment, in operation 1410, the at least one processor may acquire the first fingerprint image via the camera module in the TEE. For example, the first fingerprint image may be obtained through the secure camera. However, it is not limited thereto. For example, in operation 1410, the at least one processor may acquire the first image through the camera module in the physically separated secure environment (e.g., an eSE or a secure processor).

According to an embodiment, in operation 1420, the at least one processor may obtain the reference fingerprint image, based on the first fingerprint image. For example, the at least one processor may obtain the reference fingerprint image using the first artificial intelligence model trained to convert the first fingerprint image into the reference fingerprint image. In an embodiment, the at least one processor may obtain the reference fingerprint image using the second artificial intelligence model trained to alter the distorted portion of the first fingerprint image and/or the third artificial intelligence model trained to remove the distorted portion of the first fingerprint image. Operation 1420 may refer to the contents of the first fingerprint image 320 and the reference fingerprint image 330 of FIG. 3, and the contents of FIG. 5 and FIG. 6.

According to an embodiment, in operation 1420, the at least one processor may obtain the reference fingerprint image, based on the first fingerprint image in the TEE. For example, the reference fingerprint image may be obtained via the secure camera. However, it is not limited thereto. For example, in operation 1420, the at least one processor may obtain the reference fingerprint image, based on the first fingerprint image in the physically separated secure environment (e.g., an eSE or a secure processor).

According to an embodiment, in operation 1430, the at least one processor may generate the fingerprint information, based on the reference fingerprint image. For example, based on the reference fingerprint image, the at least one processor may generate the fingerprint information of the plurality of areas of the reference fingerprint image. Operation 1430 may refer to the contents of the reference fingerprint image 330, and the fingerprint information 340 of the plurality of areas 341 of the reference fingerprint image 330 of FIG. 3.

According to an embodiment, in operation 1430, the at least one processor may generate the fingerprint information, based on the reference fingerprint image in the TEE. However, it is not limited thereto. For example, in operation 1420, the at least one processor may generate the fingerprint information, based on the reference fingerprint image in the physically separated secure environment (e.g., an eSE or a secure processor). According to an embodiment, the at least one processor may transmit the generated fingerprint information to a rich execution environment (REE). For example, the at least one processor may transmit to the REE, size information of a map (e.g., an image map) including the plurality of grid areas which segment the reference fingerprint image 330.

According to an embodiment, in operation 1440, the at least one processor may display the first visual object on the display. For example, the at least one processor may generate the first visual object for guiding the user's fingerprint input based on the reference fingerprint image and the fingerprint information. The at least one processor may display the generated first visual object on the display. Operation 1440 may refer to the contents of FIG. 7 and FIG. 8.

According to an embodiment, in operation 1440, the at least one processor may generate the first visual object for guiding the user's fingerprint input based on the reference fingerprint image and the fingerprint information, in the REE. In the REE, the at least one processor may display the generated first visual object on the display.

According to an embodiment, in operation 1450, the at least one processor may acquire the second fingerprint image through the fingerprint sensor. For example, the at least one processor may acquire the second fingerprint image via the fingerprint sensor, which is distinct from the first fingerprint image acquired via the camera. In one example, the first fingerprint image acquired via the camera may include the whole fingerprint image, and the second fingerprint image acquired via the fingerprint sensor may include a partial fingerprint image. However, it is not limited thereto.

According to an embodiment, in operation 1450, the at least one processor may obtain the second fingerprint image through the fingerprint sensor in the TEE. However, it is not limited thereto. For example, in operation 1450, the at least one processor may acquire the second fingerprint image via the fingerprint sensor in the physically separated secure environment (e.g., an eSE or a secure processor). According to an embodiment, in operation 1460, the at least one processor may identify the area corresponding to the position of the second fingerprint image. For example, based on at least one crop image corresponding to the second fingerprint image, the at least one processor may identify the first area corresponding to the position of the second fingerprint image among the plurality of areas of the reference fingerprint image. Operation 1460 may refer to the content of FIG. 9.

According to an embodiment, in operation 1460, the at least one processor may identify the area corresponding to the position of the second fingerprint image in the TEE. However, it is not limited thereto. For example, in operation 1460, the at least one processor may identify the area corresponding to the position of the second fingerprint image in the physically separated secure environment (e.g., an eSE or a secure processor).

According to an embodiment, in operation 1470, the at least one processor may determine whether the second fingerprint image is enrolled. For example, the at least one processor may determine whether the second fingerprint image is enrolled, based on whether the fingerprint information of the first area includes the image corresponding to the second fingerprint image.

According to an embodiment, in operation 1470, the at least one processor may determine whether the second fingerprint image is enrolled in the TEE. However, it is not limited thereto. For example, in operation 1470, the at least one processor may determine whether the second fingerprint image is enrolled in the physically separated secure environment (e.g., an eSE or a secure processor).

According to an embodiment, in operation 1480, the at least one processor may update the enrolled fingerprint image such that the enrolled fingerprint image includes the second fingerprint image, based on the determination result of operation 1470. For example, the at least one processor may update the enrolled fingerprint image such that the enrolled fingerprint image includes the second fingerprint image, based on determining that the fingerprint information of the first area does not include the image corresponding to the second fingerprint image.

According to an embodiment, in operation 1480, the at least one processor may update the enrolled fingerprint image such that the enrolled fingerprint image includes the second fingerprint image in the TEE. However, it is not limited thereto. For example, in operation 1480, the at least one processor may update the enrolled fingerprint image such that the enrolled fingerprint image includes the second fingerprint image in the physically separated secure environment (e.g., an eSE or a secure processor).

According to an embodiment, in operation 1480, the at least one processor may store the fingerprint data relating to the second fingerprint image in the memory (e.g., the memory 250 of FIG. 2), based on the determination result of operation 1470. For example, the at least one processor may store the fingerprint data of the second fingerprint image in the memory, based on determining that the fingerprint information of the first area does not include the image corresponding to the second fingerprint image. Operation 1470 and operation 1480 may refer to the content of FIG. 9.

According to an embodiment, in operation 1490, the at least one processor may control the display to display the second visual object. For example, the at least one processor may control the display to display the second visual object which updates at least a partial area of the first visual object based on the first area. In one example, the at least one processor may control the display to display the second visual object updating at least a partial area of the first visual object corresponding to the first area. In one example, the at least one processor may control the display to display the second visual object updating a partial area of the first visual object corresponding to the second area other than the first area in the plurality of areas of the reference fingerprint image. Operation 1490 may refer to the contents of FIG. 9 and FIG. 10.

According to an embodiment, in operation 1490, the at least one processor may control the display to display the second visual object, in the REE.

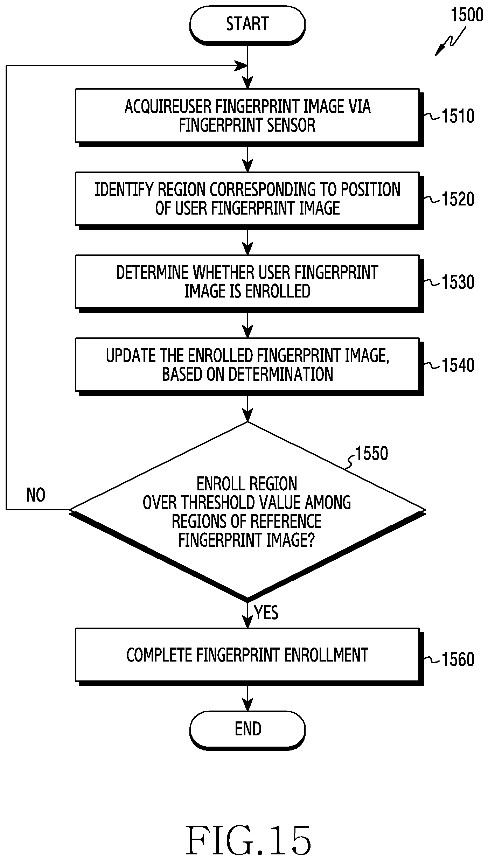

FIG. 15 is a flowchart illustrating a process for completing fingerprint enrollment according to an embodiment.

Content of FIG. 15 may refer to the contents of FIG. 1, FIG. 2, FIG. 3, FIG. 4, FIG. 5, FIG. 6, FIG. 7, FIG. 8, FIG. 9, FIG. 10, FIG. 11, FIG. 12, FIG. 13 and/or FIG. 14 explained above.

Referring to FIG. 15, a process 1500 for completing the fingerprint enrollment of the electronic device according to an embodiment may include acquiring the fingerprint image of the user via the fingerprint sensor in operation 1510, identifying the area corresponding to the position of the fingerprint image of the user in operation 1520, determining whether the fingerprint image of the user is enrolled in operation 1530, updating the enrolled fingerprint image based on the determination result in operation 1540, determining whether a area over the threshold value is enrolled among the plurality of areas of the reference fingerprint image in operation 1550, and completing the fingerprint enrollment in operation 1550. However, the process 1500 of completing the fingerprint enrollment of the electronic device is not limited thereto. For example, the process 1500 of completing fingerprint enrollment of the electronic device may omit at least one operation, or further include at least one operation.

According to an embodiment, operation 1510 may refer to operation 1450 of FIG. 14. Operation 1520 may refer to operation 1460 of FIG. 14. Operation 1530 may refer to operation 1470 of FIG. 14. Operation 1540 may refer to operation 1480 of FIG. 14.

According to an embodiment, operation 1510 may be an operation following operation 1490 of FIG. 14. However, it is not limited thereto. For example, operation 1550 may be an operation following operation 1480 of FIG. 14.

According to an embodiment, in operation 1550, the at least one processor may determine whether the area over the threshold value is enrolled among the plurality of areas of the reference fingerprint image. For example, in response to acquiring the user fingerprint image through the fingerprint sensor, the at least one processor may determine whether the area over the threshold value is enrolled among the plurality of areas of the reference fingerprint image.

According to an embodiment, based on determining in operation 1550 that the area over the threshold value is enrolled among the plurality of areas of the reference fingerprint image, the at least one processor may finish the fingerprint enrollment in operation 1560. For example, the at least one processor may complete the fingerprint enrollment, based on determining that the enrolled fingerprint image corresponding to the reference fingerprint image is obtained.

According to an embodiment, based on determining in operation 1550 that the area over the threshold value is not enrolled among the plurality of areas of the reference fingerprint image, the at least one processor may re-perform operation 1510. For example, based on determining that the enrolled fingerprint image corresponding to the reference fingerprint image is not obtained, the at least one processor may re-perform operation 1510. For example, the at least one processor may acquire an additional fingerprint image of the user via the fingerprint sensor, based on determining that the area over the threshold value is not enrolled among the plurality of areas of the reference fingerprint image.

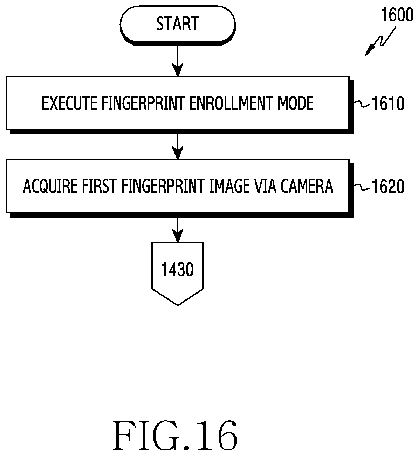

FIG. 16 is a flowchart illustrating a process for a fingerprint enrollment operation according to an embodiment.

Content of FIG. 16 may refer to the contents of FIG. 1, FIG. 2, FIG. 3, FIG. 4, FIG. 5, FIG. 6, FIG. 7, FIG. 8, FIG. 9, FIG. 10, FIG. 11, FIG. 12, FIG. 13, FIG. 14 and/or FIG. 15 explained above.

According to an embodiment, a process 1600 relating to the fingerprint enrollment operation may include executing the fingerprint enrollment mode in operation 1610, and acquiring the first fingerprint image via the camera in operation 1620.

According to an embodiment, the operating method of the electronic device (e.g., the operating method of the electronic device 1400 of FIG. 14) may further include executing the fingerprint enrollment mode in operation 1610. However, it is not limited thereto.

According to an embodiment, in operation 1610, the at least one processor (e.g., processor 240 of FIG. 2) may execute the fingerprint enrollment mode. For example, the at least one processor may determine context information related to the fingerprint input to the fingerprint sensor. For example, the at least one processor may identify whether an application related to the fingerprint input is executed. For example, the at least one processor may identify whether a fingerprint input window is executed. The at least one processor may determine whether the context information relating to the fingerprint input to the fingerprint sensor includes first context information relating to the fingerprint enrollment. For example, the at least one processor may determine whether an application relating to the fingerprint enrollment is executed. For example, the at least one processor may determine whether the fingerprint enrollment window is executed.

According to an embodiment, if determining that the context information relating to the fingerprint input to the fingerprint sensor includes the first context information relating to the fingerprint enrollment, the at least one processor may execute the fingerprint enrollment mode.

According to an embodiment, in operation 1620, the at least one processor may acquire the first fingerprint image through the camera, in response to the fingerprint enrollment mode executed. Operation 1620 may refer to operation 1410 of FIG. 14.

According to an embodiment, operation 1430 of FIG. 14 may be performed after operation 1620.

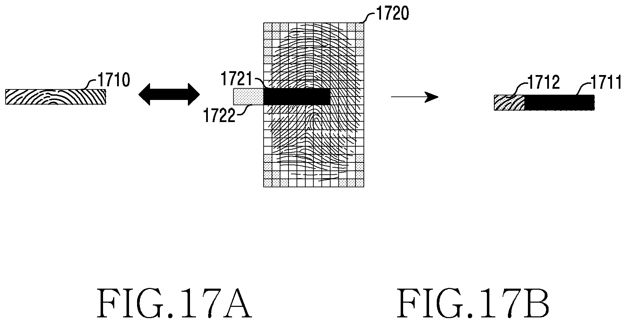

FIG. 17 is a diagram for illustrating comparing a fingerprint image acquired through a fingerprint sensor with a fingerprint image acquired through a camera in a fingerprint authentication mode according to an embodiment.

Content of FIG. 17 may refer to the contents of FIG. 1, FIG. 2, FIG. 3, FIG. 4, FIG. 5, FIG. 6, FIG. 7, FIG. 8, FIG. 9, FIG. 10, FIG. 11, FIG. 12, FIG. 13, FIG. 14, FIG. 15 and/or FIG. 16.

FIG. 17 may be the diagram for illustrating the fingerprint authentication mode operation after the fingerprint enrollment is completed.

According to an embodiment, the at least one processor (e.g., the processor 240 of FIG. 2) may obtain a fingerprint image 1710 of the user for fingerprint authentication through the fingerprint sensor after the fingerprint enrollment process (e.g., the process 1500 of FIG. 15). For example, the at least one processor may obtain a fingerprint partial image of the user for the fingerprint authentication. However, it is not limited thereto.

According to an embodiment, the at least one processor may acquire crop images based on the reference fingerprint image (e.g., the reference fingerprint image 330 of FIG. 3, the second reference fingerprint image 430b of FIG. 5, the fourth reference fingerprint image 530b or the fifth reference fingerprint image of FIG. 6). Referring to (a) of FIG. 17, based on at least one crop image corresponding to the user's fingerprint image 1710 for the fingerprint authentication acquired via the fingerprint sensor among the acquired crop images, the at least one processor may identify a area corresponding to a position of the user's fingerprint image 1710 for the fingerprint authentication acquired via the fingerprint sensor among the plurality of areas of the reference fingerprint image. Identifying the area corresponding to the position of the user's fingerprint image 1710 for the fingerprint authentication obtained via the fingerprint sensor among the plurality of areas of the reference fingerprint image may refer to the content of FIG. 9. For example, identifying the area corresponding to the position of the user's fingerprint image 1710 for the fingerprint authentication obtained via the fingerprint sensor among the plurality of areas of the reference fingerprint image may be substantially the same as identifying the area corresponding to the position of the user's fingerprint image for the fingerprint enrollment obtained via the fingerprint sensor among the plurality of areas of the reference fingerprint image.

According to an embodiment, the at least one processor may identify the area corresponding to the position of the user's fingerprint image 1710 for the fingerprint authentication obtained via the fingerprint sensor among the plurality of areas of the reference fingerprint image in the TEE. However, it is not limited thereto. For example, the at least one processor may identify the area corresponding to the position of the user's fingerprint image 1710 for the fingerprint authentication obtained via the fingerprint sensor among the plurality of areas of the reference fingerprint image in the physically separated secure environment (e.g., an eSE or a secure processor).

According to an embodiment, the at least one processor may determine whether fingerprint information of the area corresponding to the position of the fingerprint image 1710 in fingerprint information 1720 of the plurality of areas includes an image corresponding to at least a part of the fingerprint image 1710. For example, the at least one processor may determine whether fingerprint information of a third area 1721 corresponding to the position of the fingerprint image 1710 includes the image corresponding to at least a part of the fingerprint image 1710.

According to an embodiment, the at least one processor may determine whether the fingerprint authentication is successful, based on whether the fingerprint information of the third area 1721 corresponding to the position of the fingerprint image 1710 includes the image corresponding to at least a part of the fingerprint image 1710. For example, the at least one processor may determine that the fingerprint authentication is successful, based on determining that the fingerprint information of the third area 1721 includes the image corresponding to at least a part (e.g., the first portion 1711) of the fingerprint image 1710. For example, the at least one processor may determine that the fingerprint authentication is successful, based on determining that the fingerprint information of the third area 1721 includes the image corresponding to at least a part (e.g., the first portion 1711) of the fingerprint image 1710 and the fingerprint information of the third area 1721 does not include an image corresponding to the other part (e.g., a second portion 1722) of the fingerprint image 1710. For example, the at least one processor may determine that the fingerprint authentication is failure, based on determining that the fingerprint information of the third area 721 does not include the image corresponding to at least a part of the fingerprint image.

According to an embodiment, based on determining that the fingerprint information of the third area 1721 includes an image corresponding to the first portion 1711 of the fingerprint image 1710, the at least one processor may compare the first portion 1711 of the fingerprint image 1710 and at least a part of the enrolled fingerprint image. For example, the at least one processor may compare the quality of the first portion 1711 of the fingerprint image 1710 with the quality of at least a part of the enrolled fingerprint image.

According to an embodiment, based on the comparison result, the at least one processor may update the enrolled fingerprint image such that the enrolled fingerprint image includes the first portion 1711. For example, the at least one processor may update the enrolled fingerprint image such that the enrolled fingerprint image includes the first portion 1711, based on determining that the first portion 1711 of the fingerprint image 1710 has a better quality than the quality of at least a part of the enrolled fingerprint image. Hence, the quality of the enrolled fingerprint image may be improved in the fingerprint authentication operation.

According to an embodiment, based on determining that the fingerprint information of the third area 1721 does not include the image corresponding to the second portion 1712 of the fingerprint image 1710, the at least one processor may update the enrolled fingerprint image such that the enrolled fingerprint image includes the second portion 1712. For example, the at least one processor may update the enrolled fingerprint image to include the second portion 1712 in a area of the enrolled fingerprint image corresponding to the fourth area 1722. Thus, the electronic device may acquire a fingerprint image of a user's finger part not acquired in the fingerprint enrollment operation as the enrolled fingerprint image in the fingerprint authentication operation. For example, the electronic device may further acquire a fingerprint image of the side or the top of the user's finger as the enrolled fingerprint image.

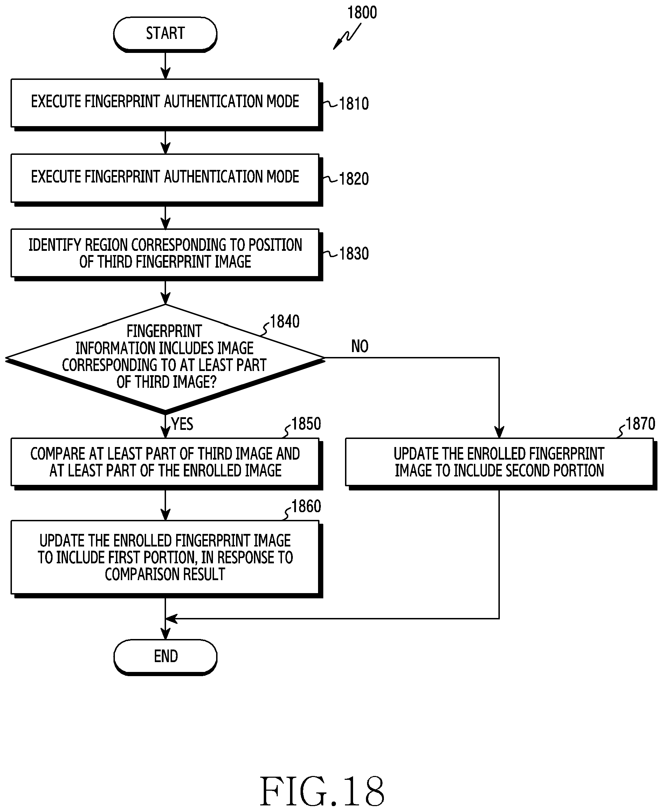

FIG. 18 is a flowchart illustrating a process for a fingerprint authentication operation according to an embodiment.

Content of FIG. 18 may refer to the contents of FIG. 1, FIG. 2, FIG. 3, FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16 and/or FIG. 17.

Referring to FIG. 18, a process 1800 for the fingerprint authentication operation may include executing the fingerprint authentication mode in operation 1810, acquiring a third fingerprint image through the fingerprint sensor in operation 1820, identifying a area corresponding to a position of the third fingerprint image in operation 1830, determining whether the fingerprint information of the reference fingerprint image includes an image corresponding to at least a part of the third fingerprint image in operation 1840, in response to determining that the fingerprint information includes the image corresponding to at least a part of the third image, comparing at least a part of the third image with at least a part of the enrolled fingerprint image in operation 1850, updating the enrolled fingerprint image to include the first portion in operation 1860, in response to a comparison result, and in response to determining that the fingerprint information does not include the image corresponding to the third image, updating the enrolled fingerprint image to include the second portion in operation 1870. However, the process 1800 for the fingerprint authentication operation is not limited thereto. For example, the process 1800 for the fingerprint authentication operation may omit at least one operation, or may further include at least one operation.

According to an embodiment, in operation 1810, the at least one process (e.g., the process 240 of FIG. 2) may execute the fingerprint authentication mode. For example, the at least one processor may identify the context information relating to the fingerprint input to the fingerprint sensor. For example, the at least one processor may identify whether the application relating to the fingerprint input is executed. For example, the at least one processor may identify whether the fingerprint input window is executed. The at least one processor may determine whether the context information relating to the fingerprint input to the fingerprint sensor includes second context information relating to the fingerprint authentication. For example, the at least one processor may identify whether the application relating to the fingerprint authentication is executed. For example, the at least one processor may identify whether a fingerprint authentication window is executed.

According to an embodiment, the at least one processor may execute the fingerprint authentication mode, if determining that the context information relating to the fingerprint input to the fingerprint sensor includes the second context information relating to the fingerprint authentication.

According to an embodiment, in operation 1820, the at least one processor may obtain a third fingerprint image for the fingerprint authentication of the user through the fingerprint sensor, in response to the fingerprint authentication mode executed. Operation 1820 may refer to operation 1450 of FIG. 14.

According to an embodiment, in operation 1830, the at least one processor may identify a area corresponding to the position of the third fingerprint image. For example, based on at least one crop image corresponding to the third fingerprint image, the at least one processor may identify a third area corresponding to the position of the third fingerprint image among the plurality of areas of the reference fingerprint image. Operation 1830 may refer to operation 1460 of FIG. 14 and/or the content of FIG. 9.

According to an embodiment, in operation 1840, the at least one processor may determine whether the fingerprint information includes an image corresponding to at least a part of the third image. For example, the at least one processor may determine whether fingerprint information of the third area includes an image corresponding to at least a part of the third image.

According to an embodiment, in operation 1840, the at least one processor may determine whether the fingerprint authentication is successful, based on whether the fingerprint information of the third area corresponding to the position of the third fingerprint image includes the image corresponding to at least a part of the third fingerprint image. For example, the at least one processor may determine that the fingerprint authentication is successful, based on determining that the fingerprint information of the third area includes the image corresponding to at least a part of the third fingerprint image. For example, the at least one processor may determine that the fingerprint authentication is successful, based on determining that the fingerprint information of the third area includes the image corresponding to at least a part of the third fingerprint image, and the fingerprint information of the third area does not include an image corresponding to the other part of the third fingerprint image. For example, the at least one processor may determine that the fingerprint authentication is failure, based on determining that the fingerprint information of the third area does not include the image corresponding to the third fingerprint image. According to an embodiment, the at least one processor may request fingerprint re-authentication from the user, based on determining that the fingerprint information of the third area does not include the image corresponding to at least a part of the third fingerprint image. For example, the at least one processor may request the user to re-input the fingerprint image through the fingerprint sensor.

According to an embodiment, in operation 1850, based on determining that the fingerprint information of the third area includes the image corresponding to the first portion of the third fingerprint image, the at least one processor may compare at least a part of the third image with at least a part of the enrolled image.

According to an embodiment, in operation 1860, the at least one processor may update the enrolled fingerprint image to include the first portion, in response to the comparison result. For example, based on determining that the at least a part of the third fingerprint image has a better quality than the quality of the at least a part of the enrolled fingerprint image, the at least one processor may update the enrolled fingerprint image such that the enrolled fingerprint image includes at least a part of the third fingerprint image.

According to an embodiment, in operation 1870, the at least one processor may update the enrolled fingerprint image such that the enrolled fingerprint image includes the second portion, based on determining that the fingerprint information of the third area does not include the image corresponding to the second portion of the third fingerprint image.

Operation 1840 through operation 1870 may refer to the content of FIG. 17.

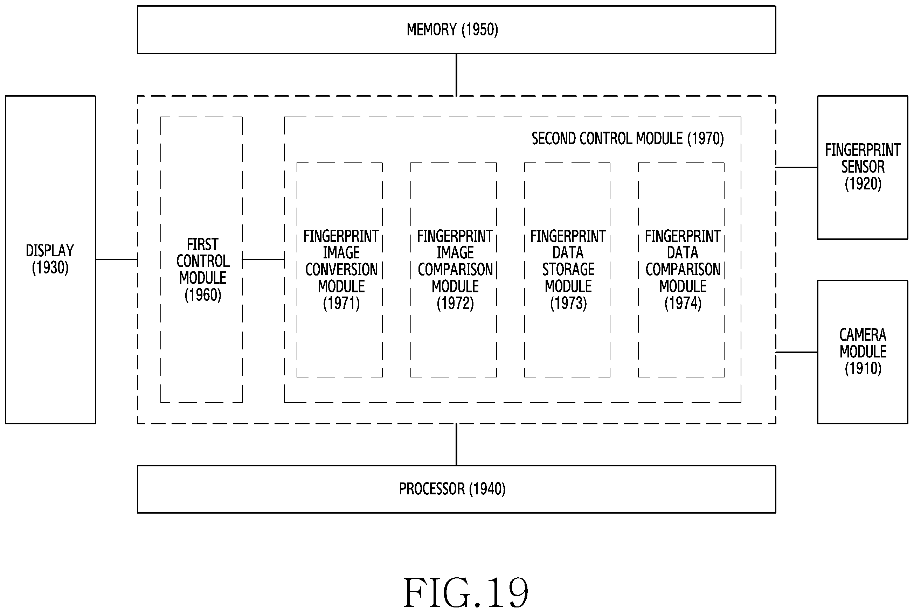

FIG. 19 is a conceptual diagram for illustrating a concept of controlling functions related to fingerprint enrollment and fingerprint authentication in an electronic device according to an embodiment.

Content of FIG. 19 may refer to the contents of FIG. 1, FIG. 2, FIG. 3, FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17 and/or FIG. 18. The same term is used for the same, or substantially the same configuration as described above.

Referring to FIG. 19, the electronic device according to an embodiment may include a camera module 1910 (e.g., the camera module 210 of FIG. 2), a fingerprint sensor 1920 (e.g., the fingerprint sensor of FIG. 2), a display 1930 (e.g., the display 230 of FIG. 2), a processor 1940 (e.g., the processor 240 of FIG. 2), and a memory 1950 (e.g., the memory 250 of FIG. 2). However, the components of the electronic device are not limited thereto. For example, the electronic device may omit at least one of the components described above, or may further include at least one other component.

According to an embodiment, the electronic device may use hardware and/or software modules to support various fingerprint enrollment related functions and/or fingerprint authentication related functions. For example, the processor 1940 may execute instructions stored in the memory 1950, and thus drive a first control module 1960 and a second control module 1970. The first control module 1960 may include at least one control module for controlling the display 1930. The second control module 1970 may include at least one module for supporting functions related to the camera module 1910 and the fingerprint sensor 1920. For example, the second control module 1970 may include a fingerprint image conversion module 1971, a fingerprint image comparison module 1972, a fingerprint data storage module 1973 and a fingerprint data comparison module 1974. However, it is not limited thereto. In various embodiments, software modules other than those shown in FIG. 19 may be implemented. For example, at least two modules may be integrated into a single module, or a single module may be divided into two or more modules. In addition, the hardware and software modules may share a single function to improve task performance. For example, the electronic device may include both an encoder implemented in hardware and an encoder implemented as a software module, part of the data acquired by at least one camera module may be processed in the hardware encoder, and the other part may be processed in the software encoder.

According to an embodiment, the first control module 1960 may control the display 1930 to display a visual object (e.g., the first visual object 311 of FIG. 4) guiding the camera module 1910 in capturing the user's finger (or fingerprint). The first control module 1960 may control the display 1930 to display the visual object (e.g., the first visual object 620 of FIG. 8) for guiding the user in the fingerprint input. The first control module 1960 may control the display 1930 to display a visual object (e.g., the visual object 1300 of FIG. 13) for guiding the fingerprint input method.

According to an embodiment, the fingerprint image conversion module 1971 may convert the finger image of the user or the fingerprint image of the user acquired through the camera module 1910 into the reference fingerprint image, or the fingerprint information of the plurality of areas of the reference fingerprint image. For example, the fingerprint image conversion module 1971 may obtain the reference fingerprint image using the first artificial intelligence model trained to convert the fingerprint image obtained through the camera module 1910 into the reference fingerprint image. For example, the fingerprint image conversion module 1971 may obtain the reference fingerprint image using the second artificial intelligence model trained to alter the distorted portion of the user fingerprint image obtained through the camera module 1910, and/or the third artificial intelligence model trained to remove (or alter) the distorted portion of the user fingerprint image obtained through the camera module 1910.

According to an embodiment, the fingerprint image comparison module 1972 may compare the fingerprint image acquired through the camera module 1910 with the fingerprint image acquired through the fingerprint sensor 1920. The fingerprint image comparison module 1972 may locate the fingerprinted area by comparing the fingerprint image acquired through the camera module 1910 and the fingerprint image acquired through the fingerprint sensor 1920.

According to an embodiment, the fingerprint data storage module 1973 may store the fingerprint data of the fingerprint image acquired via the fingerprint sensor 1920 and included in the enrolled fingerprint image in the memory 1950.

According to an embodiment, the fingerprint data comparison module 1974 may compare the fingerprint data relating to the fingerprint image stored in the memory 1950 with the fingerprint data relating to the fingerprint image acquired via the fingerprint sensor 1920.

In the embodiment of FIG. 19, it may be understood that the functions performed by the first control module 1960, the fingerprint image conversion module 1971, the fingerprint image comparison module 1972, the fingerprint data storage module 1973 and the fingerprint data comparison module 1974 are carried out by the processor 1940 by executing the instructions stored in the memory 1950. In addition, in various embodiments, the electronic device may use one or more hardware processing circuits to perform the various functions and operations disclosed herein. For example, an application processor (AP) included in a mobile device, an image signaling processor (ISP) mounted in a camera module, a display driver integrated circuit (DDIC), a touch IC, a communication processor (CP), a hardware encoder, and the like may be used to implement various embodiments disclosed herein. The processor 1940 in this document may be understood to include at least one processor described above.

In addition, the connections between the hardware/software shown in FIG. 19 are for the sake of description, and do not limit a flow/direction of data or an instruction. The components included in the electronic device may have various electrical and operational connections.

As set forth above, an electronic device (e.g., the electronic device 200 of FIG. 2) according to an embodiment may include a camera, a fingerprint sensor, a display and at least one processor coupled with the camera, the fingerprint sensor and the display. The at least one processor may obtain a first fingerprint image of a user through the camera, obtain a reference fingerprint image based on the first fingerprint image, generate fingerprint information of a plurality of areas of the reference fingerprint image, based on the reference fingerprint image, display on the display a first visual object for guiding fingerprint input of the user based on the reference fingerprint image and the fingerprint information, obtain a second fingerprint image of the user through the fingerprint sensor, identify a first area corresponding to a position of the second fingerprint image among the plurality of areas, based on at least one crop image corresponding to the second fingerprint image among crop images obtained based on the reference fingerprint image, determine whether the second fingerprint image is enrolled based on whether the fingerprint information of the first area includes the image corresponding to the second fingerprint image, based on a result of the determination, update the enrolled fingerprint image such that the enrolled fingerprint image includes the second fingerprint image, and control the display to display a second visual object updating at least a partial area of the first visual object based on the first area.

According to an embodiment, the at least one processor may acquire the first fingerprint image of the user through the camera, in response to executing a fingerprint enrollment mode.

According to an embodiment, the electronic device may further include a memory, and the at least one processor may store fingerprint data relating to the second fingerprint image in the memory, based on the result of the determination.

According to an embodiment, the at least one processor may update the enrolled fingerprint image such that the enrolled fingerprint image includes the second fingerprint image, based on not including the image corresponding to the second fingerprint image in the fingerprint information of the first area.

According to an embodiment, the at least one processor may control the display to display the second visual object updating at least a partial area of the first visual object corresponding to the first area.

According to an embodiment, the at least one processor may control the display to display the second visual object updating at least a partial area of the first visual object corresponding to a second area other than the first area in the plurality of the areas.

According to an embodiment, the at least one processor may acquire a third fingerprint image of the user through the fingerprint sensor, in response to executing a fingerprint authentication mode, identify a third area corresponding to a position of the third fingerprint image among the plurality of the areas, based on at least one crop image corresponding to the third fingerprint image among the plurality of the crop images obtained based on the reference fingerprint image, and determine whether fingerprint information of the third area includes an image corresponding to at least a part of the third fingerprint image.

According to an embodiment, the at least one processor may compare the first portion of the third fingerprint image and at least a part of the enrolled fingerprint image, based on determining that the fingerprint information of the third area includes the image corresponding to the first portion of the third fingerprint image, and update the enrolled fingerprint image such that the enrolled fingerprint image includes the first portion, based on the comparison result.

According to an embodiment, the at least one processor may update the enrolled fingerprint image such that the enrolled fingerprint image includes the second portion, based on determining that the fingerprint information of the third area does not include the image corresponding to the second portion of the third fingerprint image.

According to an embodiment, the plurality of the areas may correspond to a plurality of grid areas respectively which segment the reference fingerprint image.

According to an embodiment, the at least one processor may obtain the reference fingerprint image using a first artificial intelligence model trained to convert the first fingerprint image into the reference fingerprint image.

According to an embodiment, the at least one processor may obtain the reference fingerprint image using a second artificial intelligence model trained to modify a distorted portion of the first fingerprint image.

According to an embodiment, the at least one processor may obtain the reference fingerprint image using a third artificial intelligence model trained to remove a deformed portion of the first fingerprint image.

As set forth above, an operating method (e.g., the operating method 1400 of FIG. 14) of an electronic device according to an embodiment may include obtaining a first fingerprint image of a user through a camera, obtaining a reference fingerprint image based on the first fingerprint image, generating fingerprint information of a plurality of areas of the reference fingerprint image, based on the reference fingerprint image, displaying on a display a first visual object for guiding fingerprint input of the user, based on the reference fingerprint image and the fingerprint information, obtaining a second fingerprint image of the user through a fingerprint sensor, identifying a first area corresponding to a position of the second fingerprint image among the plurality of the areas, based on at least one crop image corresponding to the second fingerprint image among crop images obtained based on the reference fingerprint image, determining whether the second fingerprint image is enrolled based on whether the fingerprint information of the first area includes an image corresponding to the second fingerprint image, based on the determination, updating the enrolled fingerprint image such that the enrolled fingerprint image includes the second fingerprint image, and controlling the display to display a second visual object updating at least a partial area of the first visual object based on the first area.

According to an embodiment, updating the enrolled fingerprint image may include storing data relating to the second fingerprint image in a memory, based on not including the image corresponding to the second fingerprint image in the fingerprint information of the first area.

According to an embodiment, controlling the display to display the second visual object may include controlling the display to display the second visual object which updates at least a partial area of the first visual object corresponding to the first area.

According to an embodiment, controlling the display to display the second visual object may include controlling the display to display the second visual object which updates at least a partial area of the first visual object corresponding to a second area other than the first area in the plurality of the areas.

According to an embodiment, the operating method of the electronic device may include acquiring a third fingerprint image of the user through the fingerprint sensor, in response to executing a fingerprint authentication mode, identifying a third area corresponding to a position of the third fingerprint image among the plurality of the areas, based on at least one crop image corresponding to the third fingerprint image among the plurality of the crop images obtained based on the reference fingerprint image, and determining whether fingerprint information of the third area includes an image corresponding to at least a part of the third fingerprint image.

According to an embodiment, the operating method of the electronic device may include comparing the first portion of the third fingerprint image and at least a part of the enrolled fingerprint image, based on determining that the fingerprint information of the third area includes the image corresponding to the first portion of the third fingerprint image, and updating the enrolled fingerprint image such that the enrolled fingerprint image includes the first portion, based on the comparison result.

According to an embodiment, the operating method of the electronic device may include updating the enrolled fingerprint image such that the enrolled fingerprint image includes the second portion, based on not including an image corresponding to at least a part of the third fingerprint image in the fingerprint information of the third area.

The electronic device according to various embodiments disclosed in the disclosure may be a device of various types. The electronic device may include, for example, a portable communication device (e.g., a smart phone), a computer device, a portable multimedia device, a portable medical device, a camera, a wearable device, or a home appliance. The electronic device according to an embodiment of the disclosure is not limited to the devices described above.

It should be appreciated that various embodiments of the disclosure and the terms used therein are not intended to limit technological features disclosed in this document to particular embodiments, and include various modifications, equivalents, or alternatives of a corresponding embodiment. With respect to the descriptions of the drawings, similar reference numerals may be used to refer to similar or related elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include one, or all possible combinations of the items enumerated together in a corresponding one of the phrases. Such terms as "1st" and "2nd," or "first" and "second" may be used to simply distinguish a corresponding component from another, and do not limit the corresponding components in other aspect (e.g., importance or order). If an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

The term "module" used in various embodiments of the disclosure may include a unit implemented in hardware, software or firmware, and may be interchangeably used with other term, for example, logic, a logic block, a part, or circuitry. The module may be a single integral component, or a minimum unit or part thereof, for performing one or more functions. For example, according to an embodiment, the module may be implemented in a form of an application-specific integrated circuit (ASIC).

Various embodiments of the disclosure may be implemented as software (e.g., the program 140) including one or more instructions which are stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored in the storage medium, and execute it or them. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, 'non-transitory' simply means that the storage medium is a tangible device, and does not include a signal (e.g., an electromagnetic wave), but this term does not differentiate between a case where data is semi-permanently stored in the storage medium and a case where the data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or may be distributed (e.g., downloaded or uploaded) directly or online via an application store (e.g., Play Store^{™}) or between two user devices (e.g., smart phones). If distributed online, at least part of the computer program product may be temporarily stored in the machine-readable storage medium such as a memory of a manufacturer's server, an application store server, or a relay server, or may be temporarily generated.

According to various embodiments, each component (e.g., a module or a program) of the above-described components may include a single entity or multiple entities, and some of the multiple entities may be separately deployed in different components. According to various embodiments, one or more component or operations of the above-described components may be omitted, or one or more other components or operations may be added. Alternatively or additionally, a plurality of components (e.g., modules or programs) may be integrated as a single component. In this case, the integrated component may perform one or more functions of each component of the plurality of components in the same or similar manner as they are performed by a corresponding component of the plurality of components before the integration. According to various embodiments, operations performed by the module, the program or other component may be carried out sequentially, in parallel, repeatedly, or heuristically, one or more of the operations may be executed in a different order or omitted, or one or more other operations may be added.

In the present disclosure, the function or operation performed by the electronic device may be performed by one or more processors executing one or more instructions included in a program stored in a memory. The function or operation of the electronic device mentioned in the present disclosure may be performed by one processor executing one or more instructions, or may be performed by a combination of multiple processors executing one or more instructions. The processor mentioned in the present disclosure may be understood to include a circuit for performing an operation or controlling other components of the electronic device. For example, the one or more processors may include a central processing unit (CPU), a microprocessor unit (MPU), an application processor (AP), a communication processor (CP), a neural processing unit (NPU), a system on chip (SoC), or an integrated circuit (IC) configured to execute one or more instructions. The one or more processors may be configured to perform the operation of the electronic device described above.

In the present disclosure, a program (software module, software) may be stored in a non-volatile memory including a random access memory, a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, a magnetic cassette. Or, it may be stored in a memory formed by a combination of some or all of these. The memory may be formed by a single storage medium, or may be formed by a combination of a plurality of storage media. The one or more instructions may be stored in a single storage medium, or may be distributed and stored in a plurality of storage media.

## Claims

1. An electronic device comprising:
a camera;
a fingerprint sensor;
a display;
at least one processor; and
memory storing instructions, when executed by the at least one processor, individually or collectively, cause the electronic device to:
obtain a first fingerprint image of a user through the camera,
obtain a reference fingerprint image based on the first fingerprint image,
generate fingerprint information for a plurality of areas of the reference fingerprint image, based on the reference fingerprint image,
display a first visual object to guide fingerprint input of the user based on the reference fingerprint image and the fingerprint information through the display,
obtain a second fingerprint image of the user through the fingerprint sensor,
identify a first area corresponding to a position of the second fingerprint image among the plurality of areas, based on at least one crop image corresponding to the second fingerprint image among crop images obtained based on the reference fingerprint image,
determine whether the second fingerprint image is enrolled based on whether a fingerprint information of the first area includes an image corresponding to the second fingerprint image,
based on a result of the determination, update an enrolled fingerprint image so that the enrolled fingerprint image includes the second fingerprint image, and
control the display to display a second visual object in which at least a partial area of the first visual object is updated based on the first area.

2. The electronic device of claim 1, wherein the instructions, when being executed by the at least one processor individually or collectively, cause the electronic device to:
obtain the first fingerprint image of the user through the camera, in response to executing a fingerprint enrollment mode.

3. The electronic device of claim 1 or 2,
wherein the instructions, when being executed by the at least one processor individually or collectively, cause the electronic device to:
store fingerprint data relating to the second fingerprint image in the memory, based on the result of the determination.

4. The electronic device of any one of the previous claims, wherein the instructions, when being executed by the at least one processor individually or collectively, cause the electronic device to:
update the enrolled fingerprint image so that the enrolled fingerprint image includes the second fingerprint image, if the fingerprint information of the first area does not include an image corresponding to the second fingerprint image in the fingerprint information of the first region.

5. The electronic device of any one of the previous claims, wherein the instructions, when being executed by the at least one processor individually or collectively, cause the electronic device to:
control the display to display the second visual object in which at least the partial area of the first visual object corresponding to the first area is updated.

6. The electronic device of any one of the previous claims, wherein the instructions, when being executed by the at least one processor individually or collectively, cause the electronic device to:
control the display to display the second visual object in which at least the partial area of the first visual object corresponding to a second area other than the first area among the plurality of areas is updated.

7. The electronic device of any one of the previous claims, wherein the instructions, when being executed by the at least one processor individually or collectively, cause the electronic device to:
obtain a third fingerprint image of the user through the fingerprint sensor, in response to executing a fingerprint authentication mode,
identify a third area corresponding to a position of the third fingerprint image among the plurality of areas, based on at least one crop image corresponding to the third fingerprint image among the plurality of crop images obtained based on the reference fingerprint image, and
determine whether a fingerprint information of the third area comprises an image corresponding to at least a portion of the third fingerprint image.

8. The electronic device of claim 7, wherein the instructions, when being executed by the
at least one processor individually or collectively, cause the electronic device to:
as a result of the determination, if the fingerprint information of the third area includes an image corresponding to a first portion of the third fingerprint image, compare the first portion of the third fingerprint image and at least a portion of the enrolled fingerprint image, and
update the enrolled fingerprint image so that the enrolled fingerprint image includes the first portion, based on the comparison result.

9. The electronic device of claim 7 or 8, wherein the instructions, when being executed by the at least one processor individually or collectively, cause the electronic device to:
as a result of the determination, if the fingerprint information of the third area does not include an image corresponding to a second portion of the third fingerprint image, update the enrolled fingerprint image so that the enrolled fingerprint image includes the second portion.

10. The electronic device of any one of the previous claims, wherein each of the plurality of areas correspond to each of a plurality of grid areas which segment the reference fingerprint image.

11. The electronic device of any one of the previous claims, wherein the instructions, when being executed by the at least one processor individually or collectively, cause the electronic device to:
obtain the reference fingerprint image using a first artificial intelligence model trained to convert the first fingerprint image into the reference fingerprint image.

12. The electronic device of any one of the previous claims, wherein the instructions, when being executed by the at least one processor individually or collectively, cause the electronic device to:
obtain the reference fingerprint image using a second artificial intelligence model trained to modify a distorted portion of the first fingerprint image.

13. The electronic device of any one of the previous claims, wherein the instructions,
when being executed by the at least one processor individually or collectively, cause the electronic device to:
obtain the reference fingerprint image using a third artificial intelligence model trained to remove a deformed portion of the first fingerprint image.

14. An operating method of an electronic device, comprising:
obtaining a first fingerprint image of a user through a camera;
obtaining a reference fingerprint image based on the first fingerprint image;
generating fingerprint information of a plurality of areas of the reference fingerprint image, based on the reference fingerprint image;
displaying on a display a first visual object for guiding fingerprint input of the user, based on the reference fingerprint image and the fingerprint information;
obtaining a second fingerprint image of the user through a fingerprint sensor;
identifying a first area corresponding to a position of the second fingerprint image among the plurality of areas, based on at least one crop image corresponding to the second fingerprint image among crop images obtained based on the reference fingerprint image;
determining whether the second fingerprint image is enrolled based on whether the fingerprint information of the first area comprises an image corresponding to the second fingerprint image;
based on the determination, updating the enrolled fingerprint image such that the enrolled fingerprint image comprises the second fingerprint image; and
controlling the display to display a second visual object in which at least a partial area of the first visual object is updated based on the first area.

15. The operating method of claim 14, wherein updating the enrolled fingerprint image comprises:
storing fingerprint data relating to the second fingerprint image in a memory, if the fingerprint information of the first area does not include the image corresponding to the second fingerprint image.
